# EUROPEAN PATENT APPLICATION

(11) **EP 2 466 191 A1**
(43) Date of publication of application: **20.06.2012**
(21) Application number: 10817010.1
(22) Date of filing: 19.08.2010
(51) Int. Cl.: F21S 2/00, F21V 17/00, G02F 1/13357, H04N 5/64

(54) **LIGHTING DEVICE, DISPLAY APPARATUS, AND TELEVISION RECEIVER**

(30) Priority: 16.09.2009 JP 2009214795
(71) Applicant: Sharp Kabushiki Kaisha, Osaka-shi, Osaka 545-8522 (JP)
(72) Inventor: KUROMIZU, Yasumori, Osaka-shi, Osaka 545-8522 (JP)
(74) Representative: Müller-Boré & Partner Patentanwälte
(86) International application number: PCT/JP2010/063981
(87) International publication number: WO 2011/033897

(57) **Abstract**

An object of the invention is to suppress uneven brightness in a backlight unit. The backlight unit 12 includes a hot cathode tube 17 as a light source; a chassis 14 having a bottom plate 14a disposed on a side opposite to a light output side with respect to the hot cathode tube 17 and housing the hot cathode tube 17; a reflection sheet 20 having a bottom portion 20a disposed along the bottom plate 14a and a rising portion 20b rising from the bottom portion 20a toward the light output side and reflecting light; and a pressing member 21 extending over the bottom portion 20a and the rising portion 20b and having a pressing surface 28 pressing the bottom portion 20a and the rising portion 20b from the light output side.

## Description

### TECHNICAL FIELD

The present invention relates to a lighting device, a display device, and a television receiver.

### BACKGROUND ART

A liquid crystal panel used in a liquid crystal display device, such as a liquid crystal television set, does not emit light by itself. Thus, the liquid crystal panel uses a backlight unit as a separate lighting device. The backlight unit is disposed on the back side (opposite to the display surface) of the liquid crystal panel. The backlight unit includes a chassis with an opening on the side of the liquid crystal panel, a light source (such as a cold cathode tube) housed in the chassis, an optical member (such as a diffuser sheet) disposed at the opening of the chassis for emitting light efficiently toward the liquid crystal panel, and a reflection sheet disposed in the chassis for reflecting the light from the light source toward the optical member and the liquid crystal panel. An example of this type of backlight unit is disclosed in the following Patent Document 1.

Patent Document 1: Japanese Unexamined Patent Publication No. 2006-146126

### Problem to be Solved by the Invention

The reflection sheet constituting the backlight unit includes a bottom portion disposed along an inner surface of a bottom plate of the chassis, and a rising portion rising from the bottom portion toward the optical member. The rising portion enables the reflected light to be directed toward the center of the screen.

However, because the rising portion of the reflection sheet is rising from the bottom portion, the angle at which the rising portion is rising from the bottom portion may be easily varied, or deformation such as warping or bending may easily occur, resulting in an unstable shape of the rising portion. When the shape of the rising portion is unstable, the direction of light reflected by the rising portion may also be destabilized, resulting in a loss of uniformity in the light emitted from the backlight unit.

### DISCLOSURE OF THE PRESENT INVENTION

The present invention was made in view of the foregoing circumstances. An object of the present invention is to prevent uneven brightness.

### Means for Solving the Problem

A lighting device of the present invention includes a light source; a chassis including a bottom plate disposed on a side opposite to a light output side with respect to the light source and housing the light source; a reflection sheet including a bottom portion disposed along the bottom plate and a rising portion rising from the bottom portion toward the light output side, the reflection sheet configured to reflect light; and a pressing member extending over the bottom portion and the rising portion and including a pressing surface pressing the bottom portion and the rising portion from the light output side.

The rising portion of the reflection sheet is configured to rise from the bottom portion toward the light output side at an angle. The shape of the rising portion tends to be easily destabilized when the angle rising from the bottom portion is varied or deformation such as warping or bending is caused. According to the present invention, the pressing member includes the pressing surface extending over the bottom portion and the rising portion of the reflection sheet, and the bottom portion and the rising portion are pressed by the pressing surface from the light output side. Thus, displacement of the rising portion toward the light output side can be suppressed. Accordingly, the variation in the rising angle of the rising portion from the bottom portion or the deformation such as warping or bending in the rising portion can be prevented. Because the shape of the rising portion can be stably maintained, the directivity of the light reflected by the rising portion can be stabilized. Therefore, unevenness is less likely to occur in the light emitted from the lighting device.

Preferred embodiments of the present invention may include the following.
(1) The bottom plate of the chassis may be disposed in an area overlapping with the rising portion in plan view. With this configuration, compared to the configuration where the bottom plate is to be disposed in an area overlapping only with the bottom portion in plan view, the area where the bottom plate is formed is increased. Thus, other components can be mounted by utilizing the larger area of the bottom plate. A gap or a space is formed between the rising portion rising from the bottom portion and the bottom plate. As a result, the shape of the rising portion tends to be easily destabilized. However, the shape of the rising portion can be maintained appropriately by the pressing surface.

(2) The chassis may include a side plate disposed at an end portion of the bottom plate and rising toward the light output side, and an outwardly extending receiving plate disposed at a rising end portion of the side plate. The reflection sheet may include an extending portion disposed at a rising end portion of the rising portion and extending along the receiving plate. With this configuration, the bottom portion and the extending portion of the reflection sheet are disposed along the bottom plate and the receiving plate, respectively. Thus, the shape of the rising portion between the bottom portion and the extending portion can be more stabilized.

(3) The chassis may include a receiving portion disposed between the bottom plate and the rising portion. The receiving portion may be configured to receive the rising portion from the side opposite to the light output side. With this configuration, the rising portion can be held between the receiving portion and the pressing member. Thus, the shape of the rising portion can be more stably maintained.

(4) The rising portion may be rising from the bottom portion at an acute angle. With this configuration, the light reflected by the rising portion can be angled in accordance with the rising angle with respect to the bottom portion. The light can be exited to the light output side effectively with the acute rising angle.

(5) The pressing surface of the pressing member may have a bent shape substantially conforming to an outer shape of the bottom portion and the rising portion. The bent shape has a bent angle substantially the same as the rising angle of the rising portion with respect to the bottom portion. With this configuration, the bottom portion and the rising portion can be pressed by the pressing surface of the pressing member from the light output side more reliably. This maintains the shape of the rising portion more stably.

(6) The pressing surface of the pressing member may press the rising portion partially in a direction from the bottom portion to the rising portion. With this configuration, compared to the configuration where the pressing member is configured to press the rising portion along its entire length, the pressing member can be reduced in size. Thus, even when the reflection sheet and the pressing member have different light reflectance, unevenness is less likely to occur in light reflectance in the chassis.

(7) The rising portion may be inclined with respect to the bottom portion. With this configuration, the inclined rising portion can be appropriately pressed by the pressing member from the light output side.

(8) The chassis may include a light source arrangement area in which the light source is arranged and a light source non-arrangement area in which no light source is arranged. With this configuration, the chassis includes the light source non-arrangement area in which no light source is arranged. This reduces the number of the light sources compared to the configuration where light sources are disposed evenly in an entire area of the chassis. This achieves cost reduction and saving of power consumption in the lighting device.

(9) The chassis may include at least a first end portion, a second end portion disposed on an end portion opposite to the first end portion, and a middle portion sandwiched between the first end portion and the second end portion. The middle portion may correspond to the light source arrangement area, and each of the first end portion and the second end portion may correspond to the light source non-arrangement area. With this configuration, sufficient brightness can be ensured in the middle portion of the lighting device. Therefore, sufficient brightness can be also ensured in the display middle portion of a display device provided with the lighting device. Thus, good visibility can be obtained.

(10) At least a part of the bottom portion may be disposed in the light source arrangement area, and at least a part of the rising portion may be disposed in the light source non-arrangement area. The amount of light in the chassis tends to be smaller in the light source non-arrangement area than in the light source arrangement area. The rising portion rising from the bottom portion to the light output side is provided in the light source non-arrangement area, and accordingly the darker spot is less likely to be generated in the light source non-arrangement area. This suppresses uneven brightness from occurring.

(11) The lighting device may further include an optical member disposed on the light output side with respect to the light source. The optical member may have a surface facing the light source. At least the surface has light reflectance higher in a portion overlapping with the light source non-arrangement area than in a portion overlapping with the light source arrangement area. With this configuration, light emitted from the light source first reaches the portion of the optical member having the relatively high light reflectance, in which a large amount of the light is reflected (not transmitted). Thus, the brightness of illumination light is suppressed relative to the amount of light emitted from the light source. The reflected light is reflected within the chassis and the reflected light can reach the light source non-arrangement area. Because the portion of the optical member overlapping with the light source non-arrangement area has relatively low light reflectance, the portion transmits a larger amount of light therethrough, thereby providing a predetermined brightness of the illumination light.

(12) The light reflectance of at least the surface of the optical member facing the light source may decrease as is far away from the light source. With this configuration, brightness of illumination light can be uniform in the light source arrangement area and the light source non- arrangement area.

(13) The lighting device may further include an optical member disposed on the light output side with respect to the light source. The pressing member may include a support portion protruding toward the light output side and supporting the optical member. With this configuration, the pressing member can support the optical member.

(14) The pressing member may include an attaching portion protruding toward the side opposite to the light output side and attached to the bottom plate. The support portion and the attaching portion may be disposed at positions overlapping with each other in plan view. This improves attaching workability.

(15) The pressing member may include attaching portions each of which protrudes toward the side opposite to the light output side and attached to the bottom plate. The pressing member may have an elongated shape as a whole. The attaching portions may be disposed along a long side direction of the pressing member. With this configuration, the pressing member can be attached to the chassis stably, and the reflection sheet can be stably pressed.

(16) The pressing surface of the pressing member may be disposed along an entire length of the bottom portion in one direction. With this configuration, the bottom portion as well as the rising portion can be more stably pressed by the pressing member.

(17) The rising portion may include at least a pair of rising portions and the rising portions are provided to sandwich the bottom portion therebetween. The pressing surface of the pressing member may extend over the bottom portion and at least the pair of the rising portions. With this configuration, at least the pair of the rising portions disposed to sandwich the bottom portion therebetween can be pressed by the single pressing member at once. Thus, the number of the pressing members can be reduced. Accordingly, the number of components and assembly steps can be reduced, thereby contributing to cost reduction and improved workability.

(18) The pressing member may have a symmetrical shape with respect to a middle position between a pair of the rising portions. With this configuration, the pair of the rising portions can be substantially uniformly pressed by the pressing member. Therefore, the shape stability of the rising portions can further be improved.

(19) The pressing surface of the pressing member may be disposed on a part of the bottom portion. With this configuration, compared to the configuration where the pressing member is disposed on the bottom portion along its entire length in one direction, the pressing member can be reduced in size. Thus, the ratio of the surface area of the pressing member to the surface area of the reflection sheet can be decreased. Accordingly, even when the reflection sheet and the pressing member have different light reflectance, uneven light reflectance is less likely to be caused in the chassis.

(20) The rising portion may include at least a pair of rising portions that is disposed to sandwich the bottom portion therebetween, and the pressing member may include at least a pair of pressing members that is provided to correspond to the pair of the rising portions. With this configuration, the pair of the rising portions disposed to sandwich the bottom portion therebetween can be individually pressed by the respective pressing members.

(21) The bottom portion may be disposed in a middle portion of the reflection sheet, and the rising portion may include a pair of first rising portions and a pair of second rising portions. The first rising portions may be disposed to sandwich the bottom portion therebetween and the second rising portions may be disposed to sandwich the bottom portion threbetwen and disposed adjacent to the first rising portions. The pressing member may be disposed at a corner of the bottom portion, and the pressing surface may include a first pressing surface pressing the first rising portion and a second pressing surface pressing the second rising portion. The first pressing surface and the second pressing surface may be continuous with each other. With this configuration, the first rising portion and the second rising portion that are adjacent to each other can be pressed by the pressing member at once.

(22) The pressing member may have a white surface. With this configuration, light can be well reflected by the surface of the pressing member. Therefore, light emitted from the light source can be effectively utilized.

(23) The light source may be a hot cathode tube. This improves brightness.

(24) The light source may be a cold cathode tube. With this configuration, longer operating life of the light source can be achieved and light control can be easily performed.

(25) The pressing member may include a light source holding portion configured to hold the light source. With this configuration, the pressing member can hold the light source.

(26) The light source may be an LED. With this configuration, longer operating life can be achieved and power consumption can be reduced.

Next, to solve the above problem, a display device of the invention includes the lighting device described above and a display panel configured to provide a display by using light from the lighting device.

According to such a display device, uneven brightness is less likely to occur in the lighting device that supplies light to the display panel, and this achieves a display with high display quality in the display device.

The display panel may include a liquid crystal panel. The display device as a liquid crystal display device may be applied to various purposes, including displays for television and personal computers, and is particularly suitable for large screens.

### Advantageous Effect of the Invention

According to the invention, uneven brightness is less likely to occur.

### BRIEF DESCRIPTION OF THE DRAWINGS

FIG. 1 is an exploded perspective view illustrating a schematic configuration of a television receiver according to a first embodiment of the present invention;
FIG. 2 is an exploded perspective view illustrating a schematic configuration of a liquid crystal display device included in the television receiver;
FIG. 3 is a cross section view of the liquid crystal display device taken along a short side direction thereof;
FIG. 4 is a cross section view of the liquid crystal display device taken along a long side direction thereof;
FIG. 5 is a plan view illustrating a layout of a hot cathode tube and press members in the chassis included in the liquid crystal display panel;
FIG. 6 is a cross section view of FIG. 3 in which major components are enlarged;
FIG. 7 a plane view illustrating distribution of light reflectance in a diffuser plate;
FIG. 8 is an enlarged plane view of major components illustrating a schematic configuration of a surface of the diffuser plate facing the hot cathode tube;
FIG. 9 is a graph plotting a change in light reflectance of the diffuser plate in a short side direction thereof along line ix-ix of FIG. 7;
FIG. 10 is a graph plotting a change in light reflectance of the diffuser plate in a long side direction thereof along line x-x of FIG. 7;
FIG. 11 is a cross section view of the backlight unit taken along a short side direction thereof, illustrating a state before a pressing member is attached;
FIG. 12 is a cross section view of the backlight unit taken along the short side direction, illustrating a state after the pressing member is attached;
FIG. 13 is an enlarged cross section view of major components of a pressing member and a reflection sheet according to a first modification of the first embodiment;
FIG. 14 is a graph plotting a change in light reflectance of a diffuser plate in the short side direction according to a second modification of the first embodiment;
FIG. 15 is a graph plotting a change in light reflectance of the diffuser plate in the short side direction according to a third modification of the first embodiment;
FIG. 16 is a plan view illustrating a layout of a hot cathode tube and pressing members in the chassis according to a second embodiment of the present invention;
FIG. 17 is a cross section view taken along line xvii-xvii of FIG. 17;
FIG. 18 is a cross section view taken along line xviii-xviii of FIG. 17;
FIG. 19 is a plan view illustrating a layout of the hot cathode tube and the pressing members in the chassis according to a first modification of the second embodiment;
FIG. 20 is a plan view of the chassis according to a third embodiment of the present invention;
FIG. 21 is a plan view illustrating a layout of the hot cathode tube and the pressing members in the chassis;
FIG. 22 is a cross section view taken along line xxii-xxii of FIG. 21;
FIG. 23 is a plan view illustrating a layout of the hot cathode tube and the pressing members in the chassis according to a fourth embodiment of the present invention;
FIG. 24 is a cross section view taken along line xxiv-xxiv of FIG. 23;
FIG. 25 is a cross section view taken along line xxv-xxv of FIG. 23;
FIG. 26 is a plan view illustrating a layout of the cold cathode tubes and the pressing members in the chassis according to a fifth embodiment of the present invention;
FIG. 27 is a cross section view taken along line xxvii-xxvii of FIG. 26;
FIG. 28 is a plan view illustrating a layout of LEDs and the pressing members in the chassis according to a sixth embodiment of the present invention; and
FIG. 29 is a cross section view taken along line xxix-xxix of FIG. 28.

### BEST MODE FOR CARRYING OUT THE INVENTION

### <First embodiment>

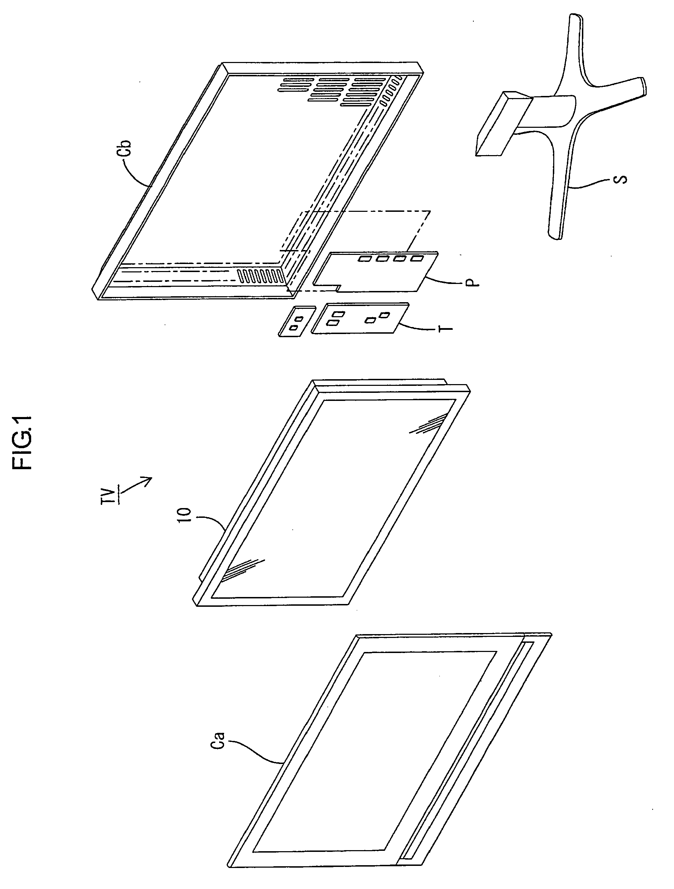

A first embodiment of the present invention will be described with reference to FIGS. 1 to 12. First, the structure of a television receiver TV including a liquid crystal display device 10 will be described.

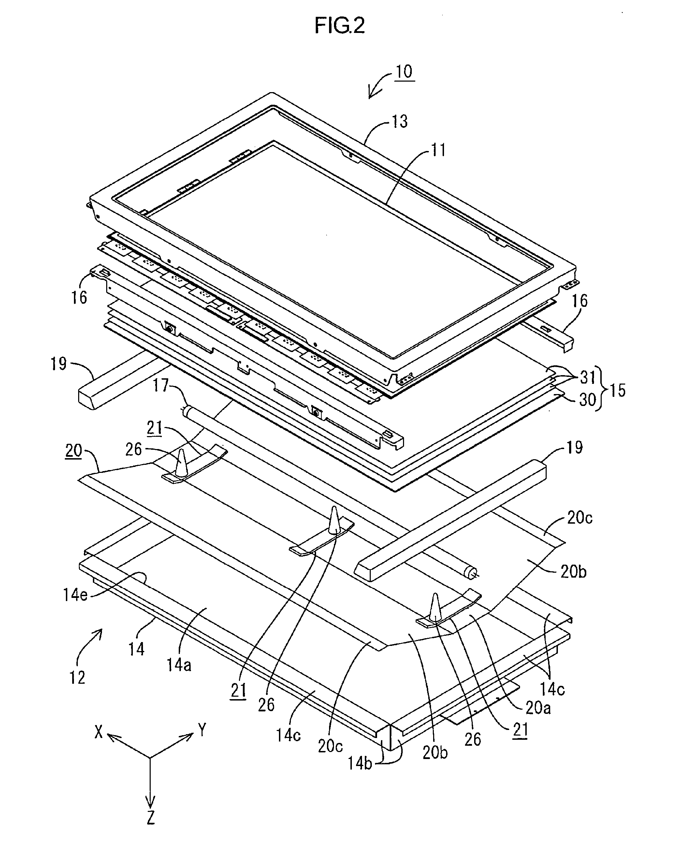

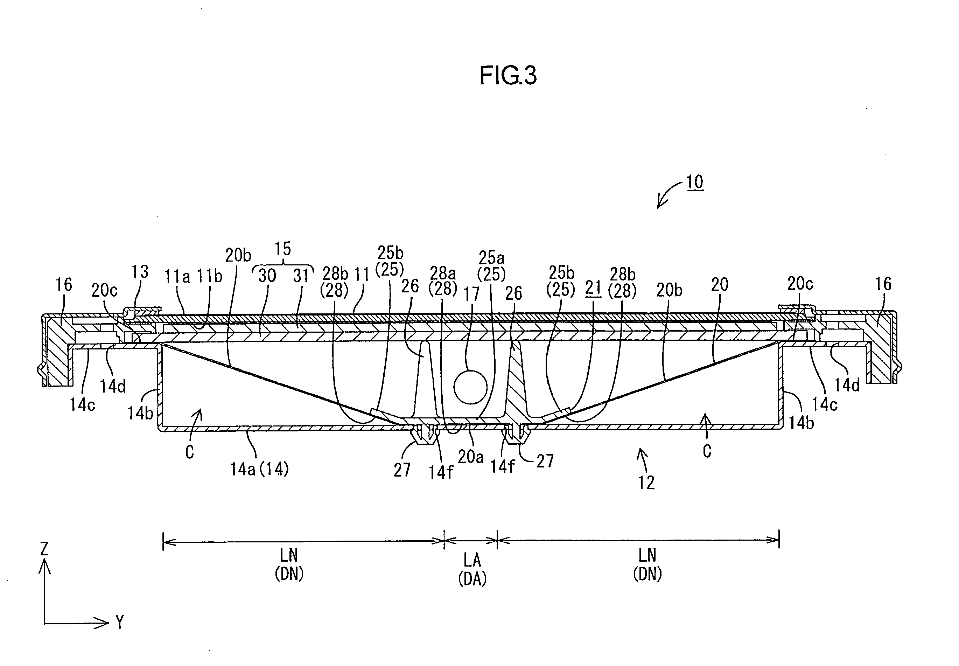

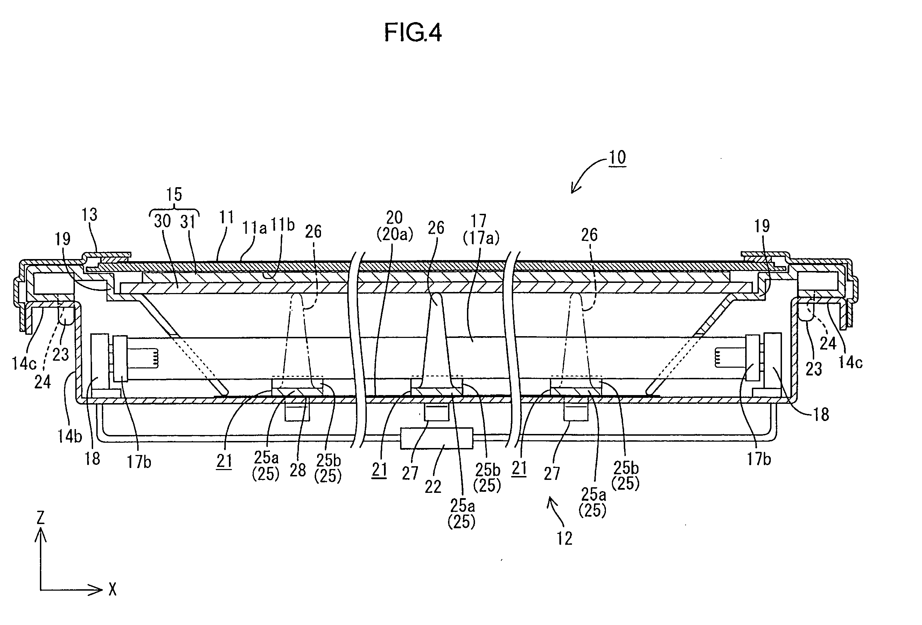

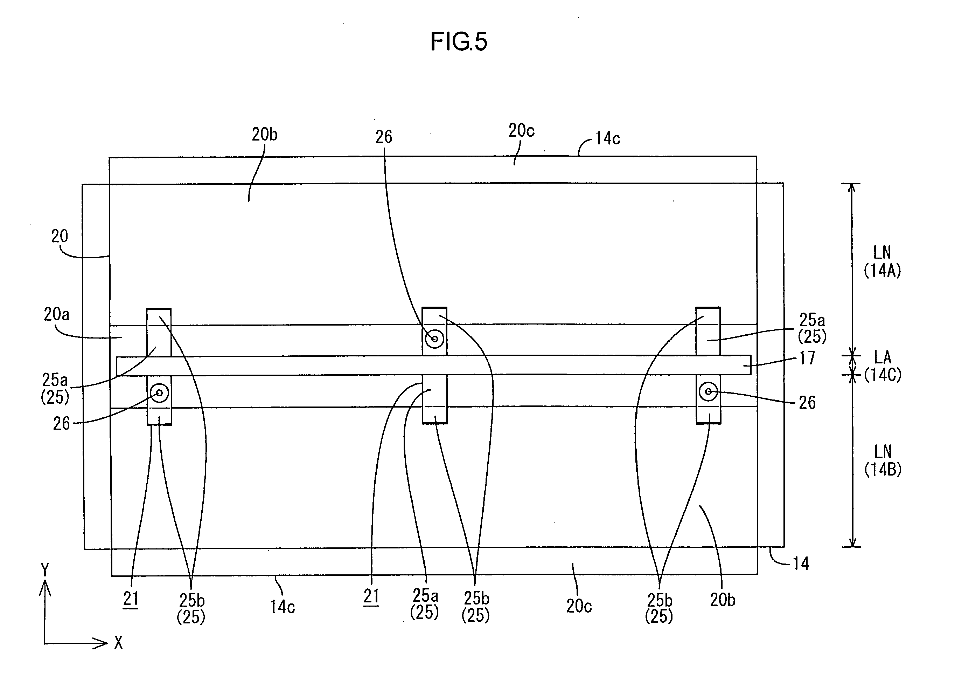

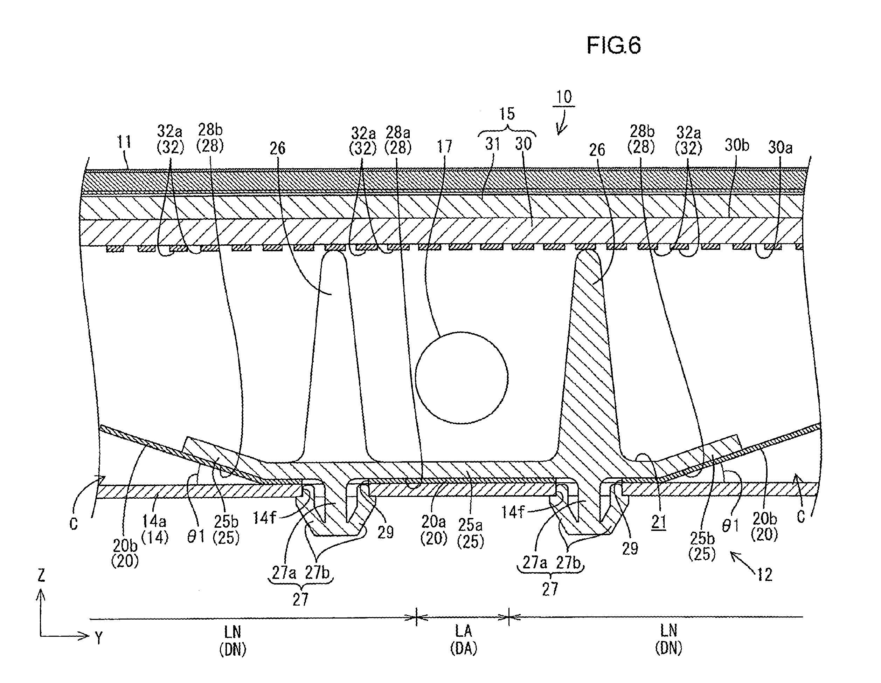

FIG. 1 is an exploded perspective view illustrating a schematic configuration of a television receiver according to the present embodiment. FIG. 2 is an exploded perspective view illustrating a schematic configuration of the liquid crystal display device included in the television receiver illustrated in FIG. 1. FIG. 3 is a cross section view taken along a short side direction of the liquid crystal display device illustrated in FIG. 2. FIG. 4 is a cross section view taken along a long side direction of the liquid crystal display device illustrated in FIG. 2. FIG. 5 is a plan view illustrating a layout of a hot cathode tube and pressing members in a chassis of the liquid crystal display device of FIG. 2. FIG. 6 is a cross section view of FIG. 3 in which major components are enlarged. In FIG. 5, a long side direction of the chassis corresponds to the X-axis direction and a short side direction corresponds to the Y-axis direction.

As illustrated in FIG. 1, the television receiver TV according to the present embodiment includes the liquid crystal display device 10, front and rear cabinets Ca and Cb respectively housing the liquid crystal display device 10 from either side thereof, a power supply P, a tuner T, and a stand S. The liquid crystal display device (display device) 10 has a horizontally long square (rectangular or elongated) shape as a whole, and is housed in a vertically disposed manner. As illustrated in FIG. 2, the liquid crystal display device 10 includes a liquid crystal panel 11 as a display panel, and a backlight unit (lighting device) 12 as an external light source. The liquid crystal panel 11 and the backlight unit 12 are integrally retained by a frame-like bezel 13, for example. In the present embodiment, the liquid crystal display device 10 has a screen size of 32 inches with the aspect ratio of 16:9, for example. More specifically, the screen may have a lateral dimension (dimension in the X-axis direction) of approximately 698 mm, and a vertical dimension (dimension in the Y-axis direction) of approximately 392 mm.

Next, the liquid crystal panel 11 and the backlight unit 12 constituting the liquid crystal display device 10 will be described (see FIGS. 2 to 4).
The liquid crystal panel (display panel) 11 includes a pair of glass substrates attached to each other with a predetermined gap therebetween, where the gap is filled with liquid crystal. On one of the glass substrates, there may be provided switching components (such as TFTs) connected to source wiring and gate wiring which are orthogonal to each other; pixel electrodes connected to the switching components; and an alignment film. On the other glass substrate, there may be provided color filters including color sections of R (red), G (green), and B (blue) disposed in predetermined arrangements, counter electrodes, and an alignment film. On an outer side of each of the substrates, a polarizing plate 11a or 11b is disposed (see FIGS. 3 and 4).

As illustrated in FIG. 2, the backlight unit 12 includes a substantially box-shaped chassis 14 having an opening 14e on a front side (light output side, i.e. , the side facing the liquid crystal panel 11) ; a group of optical members 15 (including a diffuser plate (light-diffusing member) 30 and a plurality of optical sheets 31 disposed between the diffuser plate 30 and the liquid crystal panel 11) covering the opening 14e of the chassis 14; and frames 16 disposed along the long sides of the chassis 14 retaining the group of optical members 15 by holding the long side edges thereof onto the chassis 14. The chassis 14 houses a hot cathode tube 17 as a light source (linear light source); sockets 18 providing electrical connection at the end portions of the hot cathode tube 17; and holders 19 covering both the end portions of the hot cathode tube 17 and the sockets 18 collectively. The chassis 14 also houses a reflection sheet 20 reflecting light, and pressing members 21 pressing the reflection sheet 20 from the front side. In the backlight unit 12, the light output side refers to the side facing the optical member 15 with respect to the hot cathode tube 17.

The chassis 14 may be made of a synthetic resin. As illustrated in FIGS. 3 and 4, the chassis 14 includes a bottom plate 14a; side plates 14b rising toward the front side from the end portions on each side of the bottom plate 14a; and receiving plates 14c extending outward from the rising end portion of the side plates 14b. Thus, the chassis 14 has a substantially shallow box-shaped structure as a whole. The bottom plate 14a has a rectangular (elongated) shape in which the liquid crystal panel 11 and the optical member 15 are aligned in the long side direction and the short side direction. The bottom plate 14a has an area of formation so as to be almost the same size as the liquid crystal panel 11 and the optical member 15 in plan view. The bottom plate 14a includes insertion holes at the end portions in the long side direction for inserting the sockets 18. A pair of the side plates 14b is provided at the end portions on the long sides of the bottom plate 14a, and another pair of the side plates 14b is provided at the end portions on the short sides of the bottom plate 14a. The side plates 14b are rising from the bottom plate 14a at a substantially right angle. The receiving plates 14c are formed for the individual side plates 14b and are at a substantially right angle with respect to the side plates 14b. Thus, the receiving plates 14c are parallel to the bottom plate 14a. The receiving plates 14c receive the outer-end portions of the reflection sheet 20 and the optical member 15, thus supporting the reflection sheet 20 and the optical member 15 from the back side. The receiving plates 14c include fixing holes 14d as illustrated in FIG. 3. The bezel 13, the frame 16, and the chassis 14 and the like can be integrally fastened by using screws, for example.

The reflection sheet 20 may be made of a synthetic resin (such as foamed PET) and may have a white-colored surface excellent in light reflectivity. As illustrated in FIG. 2, the reflection sheet 20 is disposed on an inner side of the chassis 14 (facing the hot cathode tube 17), covering substantially the entire area of the inner side of the chassis 14. Thus, the reflection sheet 20 is configured to reflect light emitted from the hot cathode tube 17 toward the optical member 15. The reflection sheet 20 has a rectangular (elongated) shape as a whole in which the chassis 14 is aligned in the long side direction and the short side direction and is symmetrical with respect to the short side direction. The reflection sheet 20 includes a bottom portion 20a disposed along the bottom plate 14a of the chassis 14; a pair of rising portions 20b rising from the end portions of the bottom portion 20a toward the front side (light output side); and a pair of extending portions 20c extending outward from rising end portions (opposite to the bottom portion 20a) of the rising portions 20b. Of the reflection sheet 20, the bottom portion 20a and the pair of rising portions 20b are almost the same in size as the bottom plate 14a of the chassis 14 in plan view, as illustrated in FIGS. 3 and 5. Namely, the bottom portion 20a and the pair of rising portions 20b overlap with the bottom plate 14a in plan view. In other words, the bottom plate 14a of the chassis 14 is formed in an area corresponding to the entire areas of the bottom portion 20a and the pair of rising portions 20b of the reflection sheet 20 in plan view. Thus, compared to the configuration where the bottom plate of the chassis is to be formed in an area overlapping only with the bottom portion 20a, the area of forming the bottom plate 14a is larger. The bottom plate 14a having the sufficiently large area can be used to mount various components such as an inverter board 22 or attach a wall-hanging attachment (not illustrated) for hanging the liquid crystal display device 10 on the wall.

Specifically, the bottom portion 20a is disposed at the center of the bottom plate 14a (overlapping with a middle portion 14C) of the chassis 14 in the short side direction in plan view, and parallel to the plane of the bottom plate 14a. The bottom portion 20a has a rectangular (elongated) shape, with its long side direction corresponding to the X-axis direction (along the long side direction of the chassis 14, an axial direction of the hot cathode tube 17) and its short side direction corresponding to the Y-axis direction (along the short side direction of the chassis 14). The bottom portion 20a has a long side dimension that is almost the same as the long side dimension of the bottom plate 14a of the chassis 14 and has a short side dimension smaller than the short side dimension of the bottom plate 14a. Thus, the bottom portion 20a is formed smaller than the bottom plate 14a of the chassis 14 only with respect to the short side direction.

The rising portions 20b are disposed in pairs at positions sandwiching the bottom portion 20a in the short side direction. Namely, in plan view, the rising portions 20b are disposed at both end portions of the bottom plate 14a of the chassis 14 in the short side direction (i.e., at positions overlapping with end portions 14A and 14B). Thus, the pair of rising portions 20b is rising from the end portions in the long side of the bottom portion 20a each in opposite directions. Specifically, the rising portions 20b are inclined from a proximal rising portion (closer to the bottom portion 20a) to a distal rising portion (opposite to the bottom portion 20a (closer to the extending portions 20c)) at a certain angle. Thus, the plane of each of the rising portions 20b is inclined with respect to both the Y-axis direction and the Z-axis direction, namely the plane of the bottom portion 20a. A rising angle θ1 of the rising portions 20b with respect to the bottom portion 20a (i.e., an angle of inclination with respect to the plane of the bottom portion 20a) may preferably be an acute angle not more than 90° and more preferably an angle not more than 45°. Specifically, the rising angle θ1 may be on the order of 20° to 30°. The bottom portion 20a of the reflection sheet 20 is extended along the inner surface of the bottom plate 14a of the chassis 14 with virtually no gap. On the other hand, there is a gap C between each of the rising portions 20b and the bottom plate 14a since the rising portions 20b rises away from the bottom plate 14a. The gap C is gradually increased from the proximal rising end to the distal rising end. Namely, the rising portions 20b are lifted on the front side with the gap C between the rising portions 20b and the bottom plate 14a. Thus, the gap C forms a substantially triangular shape in a lateral view (see FIG. 3). The rising portions 20b have a rectangular (elongated) shape in plan view that corresponds to the bottom portion 20a in the long side direction and the short side direction. The rising portions 20b have a long side dimension that is almost the same as the long side dimension of the bottom plate 14a of the chassis 14, and have a short side dimension smaller than the short side dimension of the bottom plate 14a. Namely, the rising portions 20b are smaller than the bottom plate 14a of the chassis 14 only in the short side direction. The area of each of the rising portions 20b (length dimension in the Y-axis direction) may be larger than the area of the bottom portion 20a (length dimension in the Y-axis direction).

The extending portions 20c are extended outward from the distal rising end of each of the rising portions 20b, and are disposed so as to overlap with the receiving plates 14c of the chassis 14 in plan view. The extending portions 20c are parallel to the plane of the bottom portion 20a (or the bottom plate 14a and the receiving plates 14c), and are disposed on the front sides of the receiving plates 14c. The extending portions 20c are held between the receiving plates 14c and outer-edge portions of the diffuser plate 30.

As illustrated in FIG. 2, the optical member 15 has a horizontally long square (rectangular) shape in plan view, similar to the liquid crystal panel 11 and the chassis 14. The optical member 15 is disposed between the liquid crystal panel 11 and the hot cathode tube 17 and includes the diffuser plate 30 disposed on the back side (facing the hot cathode tube 17; the side opposite to the light output side), and the optical sheet 31 disposed on the front side (i.e., closer to the liquid crystal panel 11; the light output side). The diffuser plate 30 is formed by dispersing a large number of diffusing particles in an almost transparent resin base substrate with a predetermined thickness. The diffuser plate 30 has a function of diffusing transmitted light, and also has a function of reflecting light emitted from the hot cathode tube 17 as described later in detail. The optical sheet 31 may be formed by a layer structure of three sheets each of which has a thickness smaller than the thickness of the diffuser plate 30. Specifically, the optical sheet 31 may include a diffuser sheet, a lens sheet, and a reflecting type polarizing sheet layered in order from the diffuser plate 30 (back side).

As illustrated in FIGS. 3 and 4, the hot cathode tube 17 is tubular (linear) as a whole and includes a hollow glass tube 17a and a pair of electrodes 17b at the end portions of the glass tube 17a. The glass tube 17a may contain mercury, rare gas or the like, and an inner wall of the glass tube 17a is coated with a fluorescent material. Each of the electrodes 17b includes a filament and a pair of terminals connected to the ends of the filament. Sockets 18 are fitted over the end portions of the hot cathode tube 17. The terminals are connected to the inverter board 22 mounted on the outer surface side (back surface side) of the bottom plate 14a of the chassis 14 via sockets 18. The hot cathode tube 17 is supplied with drive electric power from the inverter board 22. The inverter board 22 can control the tube current value, i.e. , brightness (lighting state) of the hot cathode tube 17. The hot cathode tube 17 may be disposed between the diffuser plate 30 and the bottom plate 14a (or the reflection sheet 20) of the chassis 14, which is closer to the bottom plate 14a of the chassis 14 than it is to the diffuser plate 30. The hot cathode tube 17 may have an outer diameter greater than the outer diameter (about 4 mm) of a cold cathode tube. For example, the outer diameter of the hoot-cathode tube 17 is about 15.5 mm.

The hot cathode tube 17 with the above structure is housed within the chassis 14 such that the length direction (axial direction) of the hot cathode tube 17 is aligned with the long side direction of the chassis 14. The hot cathode tube 17 is disposed substantially at the center of the chassis 14 in the short side direction. Specifically, when the bottom plate 14a of the chassis 14 (the portion facing the optical member 15 and the hot cathode tube 17) is divided into a first end portion 14A, a second end portion 14B on the end portion opposite to the first end portion 14A, and a middle portion 14C therebetween along the short side direction (Y-axis direction), the hot cathode tube 17 is disposed at the middle portion 14C, where a light source arrangement area LA is provided. On the other hand, the hot cathode tube 17 is not disposed at the first end portion 14A or the second end portion 14B of the bottom plate 14a, where light source non-arrangement areas LN are provided. Thus, the hot cathode tubes 17 are eccentrically disposed at the middle portion 14C of the bottom plate 14a of the chassis 14 in the short side direction, where the light source arrangement area LA is formed. The light source arrangement area LA has an area (length dimension in the Y-axis direction) smaller than the area of each of the light source non-arrangement areas LN (length dimension in the Y-axis direction) . The ratio of the area of the light source arrangement area LA (length dimension in the Y-axis direction) to the area of the entire screen (vertical dimension (short side dimension) of the screen) may be on the order of 4%. The pair of the light source non-arrangement areas LN has substantially the same area. While a part of the bottom portion 20a of the reflection sheet 20 (specifically, a middle portion in the short side direction) overlaps with the middle portion 14C (the light source arrangement area LA) of the chassis 14 in plan view, another part of the bottom portion 20a (specifically end portions thereof in the short side direction) and the rising portions 20b of the reflection sheet 2 0 overlap with the first end portion 14A and the second end portion 14B (the light source non-arrangement areas LN) in plan view. Namely, while a major portion of the bottom portion 20a is located within the light source arrangement area LA, a part of the bottom portion 20a at both end portions thereof and all of the rising portions 20b are located within the light source non-arrangement areas LN. The hot cathode tube 17 may have a length dimension substantially equal to the lateral dimension (long side dimension) of the screen.

The holders 19 covering the end portions of the hot cathode tube 17 and the sockets 18 may be made of a white synthetic resin and, as illustrated in FIG. 2, have a long and substantially box-like shape extending along the short side direction of the chassis 14. As illustrated FIG. 4, the holders 19 include a stepped surface on the front side on which the optical member 15 and the liquid crystal panel 11 can be mounted at different levels. The holders 19 are partially overlapping with the receiving plates 14c of the chassis 14 in the short side direction, thus forming the side walls of the backlight unit 12 together with the receiving plates 14c. Insertion pins 23 protrude from the surfaces of the holders 19 facing the receiving plates 14c of the chassis 14. By inserting the insertion pins 23 into insertion holes 24 formed in the upper surface of the receiving plates 14c of the chassis 14, the holders 19 can be attached to the chassis 14.

The pressing members 21 may be made of a synthetic resin (such as polycarbonate) and all of their surfaces may have a white-based color, such as white for high reflectivity. As illustrated in FIGS. 2 and 5, three pressing members 21 are disposed in the chassis 14 parallel to one another at intervals in the long side direction. Specifically, the pressing members 21 are disposed at substantially the middle position in the short side direction of the chassis 14, while in the long side direction of the chassis 14, the pressing members 21 are distributed at the substantially middle position and positions near the end portions.

As illustrated in FIGS. 2 and 3, the pressing members 21 include a body portion 25 having a pressing surface 28 pressing the reflection sheet 20 from the front side (light output side); a support portion 26 protruding from the body portion 25 toward the front side (light output side) and configured to support the diffuser plate 30; and an attaching portion 27 protruding from the body portion 25 toward the back side (opposite to the light output side; (toward the bottom plate 14a of the chassis 14)) and configured to attach the pressing member 21 onto the chassis 14. The body portion 25 has a rectangular (elongated) shape in plan view. The body portion 25 is disposed in the chassis 14 with the long side direction aligned with the Y-axis direction (i.e., the short side direction of the chassis 14 and the reflection sheet 20) and the short side direction aligned with the X-axis direction (i.e. , the long side direction of the chassis 14 and the reflection sheet 20) . The body portion 25 has a long side dimension greater than the short side dimension of the bottom portion 20a of the reflection sheet 20, such that a part of the body portion 25 reaches the rising portions 20b. Thus, the body portion 25 has a bent shape in conformity with the outer shape of the middle portion of the reflection sheet 20 (extending over the bottom portion 20a and the rising portions 20b) in the short side direction, in a side view (FIGS. 3 and 6) . The body portion 25 has a symmetrical shape with respect to the center of the long side direction of the body portion 25 (between the rising portions 20b).

Specifically, as illustrated in FIGS. 3 and 6, the body portion 25 includes a bottom-portion pressing portion 25a at the middle portion thereof in the long side direction. The bottom-portion pressing portion 25a overlaps with the bottom portion 20a in plan view and includes a bottom-portion pressing surface 28a configured to press the bottom portion 20a from the front side. The body portion 25 includes rising portion pressing portions 25b at the end portions thereof in the long side direction. The end portions of the body portion 25 are rising from the bottom-portion pressing portion 25a toward the front side. The rising portion pressing portions 25b overlap with the rising portions 20b in plan view and include rising portion pressing surfaces 28b configured to press the rising portions 20b from the front side. In other words, the bottom-portion pressing portion 25a and the rising portion pressing portions 25b include a pressing surface 28 whose entire area is in contact with the reflection sheet 20. The pressing surface 28 is configured to press an area extending over the bottom portion 20a and the rising portions 20b of the reflection sheet 20. More specifically, the bottom-portion pressing portion 25a is in the form of a substantially straight plate parallel to the bottom portion 20a. On the other hand, the rising portion pressing portions 25b are inclined from their proximal rising portions (the end portions closer to the bottom-portion pressing portion 25a) to their distal rising portions (the end portions opposite to the bottom-portion pressing portion 25a) at a certain angle. This inclination angle ("bent angle" or "rising angle") is substantially the same as the inclination angle θ1 of the rising portions 20b with respect to the bottom portion 20a. Specifically, the rising angle of the rising portion pressing portions 25b may preferably include an acute angle (less than 90°) and more preferably an angle not more than 45°, and more preferably the rising angle is about 20° to 30°. The bottom-portion pressing portion 25a is configured to press the bottom portion 20a along its entire length in the short side direction with almost no gap. On the other hand, the rising portion pressing portions 25b are configured to press a part of the rising portions 20b in their short side direction, specifically the portions (proximal rising portions) of the rising portions 20b adjacent to the bottom portion 20a with almost no gap. Thus, the body portion 25 is reduced in size compared to the configuration where the body portion is to be of a size such that it would press the entire length of the rising portions 20b in their short side direction.

As illustrated in FIGS. 3 and 4, the support portions 26 are configured to support the optical member 15 from the back side, i.e., from the side of the hot cathode tube 17. Therefore, the positional relationship (distance or interval) between the optical member 15 (particularly the diffuser plate 30) and the hot cathode tube 17 in the Z-axis direction (orthogonal to the plane of the optical member 15) can be regulated to be constant. Thus, desired optical functions of the optical member 15 can be stably obtained. The support portions 26 are provided at the bottom-portion pressing portion 25a of the body portion 25. Specifically, the support portions 26 are eccentrically disposed closer to one end portion of the bottom-portion pressing portion 25a in the long side direction. In the chassis 14, the pressing members 21 are disposed along the long side direction such that the adjacent support portions 26 are arranged in staggered manner (FIGS. 2 and 5). The support portions 26 are conical as a whole with their axial direction aligned with the Z-axis direction (substantially orthogonal to the plane of the diffuser plate 30) . Specifically, the support portions 26 have a circular cross section taken along the plane of the bottom-portion pressing portion 25a, with the diameter gradually decreasing from a proximal end of the protrusion to its distal end, to have a tapered shape. The support portions 26 have a protrusion dimension substantially equal to the distance between the front side surface of the bottom-portion pressing portion 25a and the back side surface of the diffuser plate 30, which is substantially straight along the X-axis direction and the Y-axis direction. Thus, the support portions 26 are configured to abut on the diffuser plate 30 in a substantially straight state. Protrusion distal portions of the support portions 26 abutting on the diffuser plate 30 may be rounded. The support portions 26 may be in the form of dots in the plane of the optical member 15.

As illustrated in FIG. 6, the attaching portions 27 can retain the pressing member 21 in an attached state with respect to the chassis 14 when the attaching portions 27 are inserted into and locked in attaching holes 14f formed in the bottom plate 14a of the chassis 14. The attaching portions 27 are provided in pairs in the bottom-portion pressing portion 25a of the body portion 25. Specifically, the pair of attaching portions 27 is disposed at eccentric positions in the bottom-portion pressing portion 25a closer to the end portions thereof in the long side direction. The pair of the attaching portions 27 is disposed at spaced positions in the Y-axis direction (the long side direction of the body portion 25) . One of the pair of attaching portions 27 (the attaching portion 27 at the right in FIG. 6) is disposed at a position overlapping with the support portion 26 on the front side in plan view, more specifically at a concentric position. The attaching portions 27 include a base portion 27a protruding from the bottom-portion pressing portion 25a toward the back side; and a pair of locking portions 27b folded from the end of protrusion of the base portion 27a back toward the bottom-portion pressing portion 25a. When inserting the attaching portion 27 into the attaching holes 14b in the bottom plate 14a of the chassis 14, the locking portions 27b are elastically deformed for a while during the insertion process. When the attaching portion 27 reaches a complete insertion depth, the deformed locking portions 27b recover, such that the distal ends of the locking portions 27b are locked on the edges of the attaching hole 14f from the back side. Thus, the pressing members 21 can be retained in the attached state with respect to the chassis 14. In the bottom portion 20a of the reflection sheet 20, insertion holes 29 are formed at positions corresponding to the attaching holes 14f. The insertion holes 29 through which the attaching portions 27 can be inserted are communicated with the attaching holes 14f.

Next, the light-reflecting function of the diffuser plate 30 will be described.

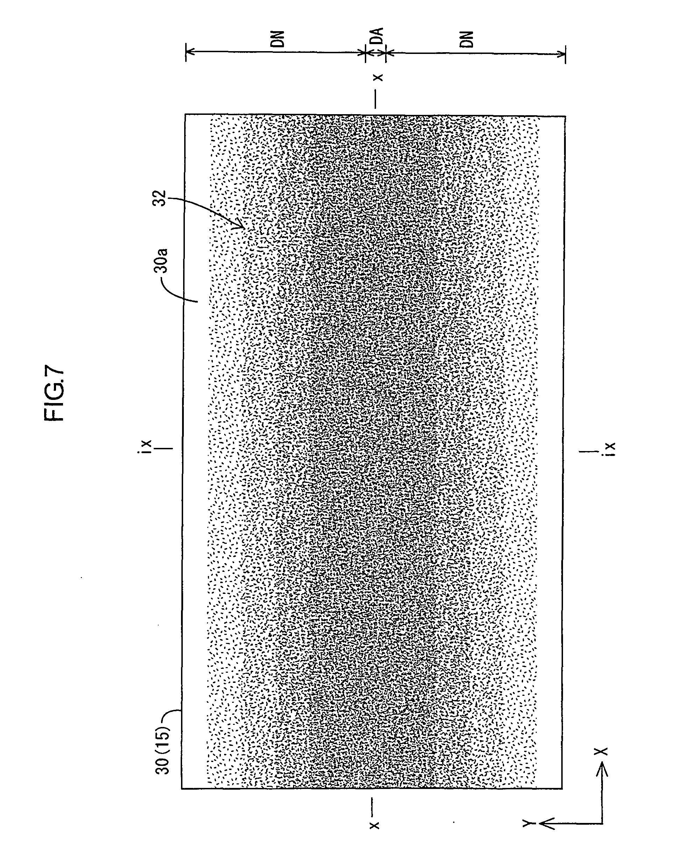

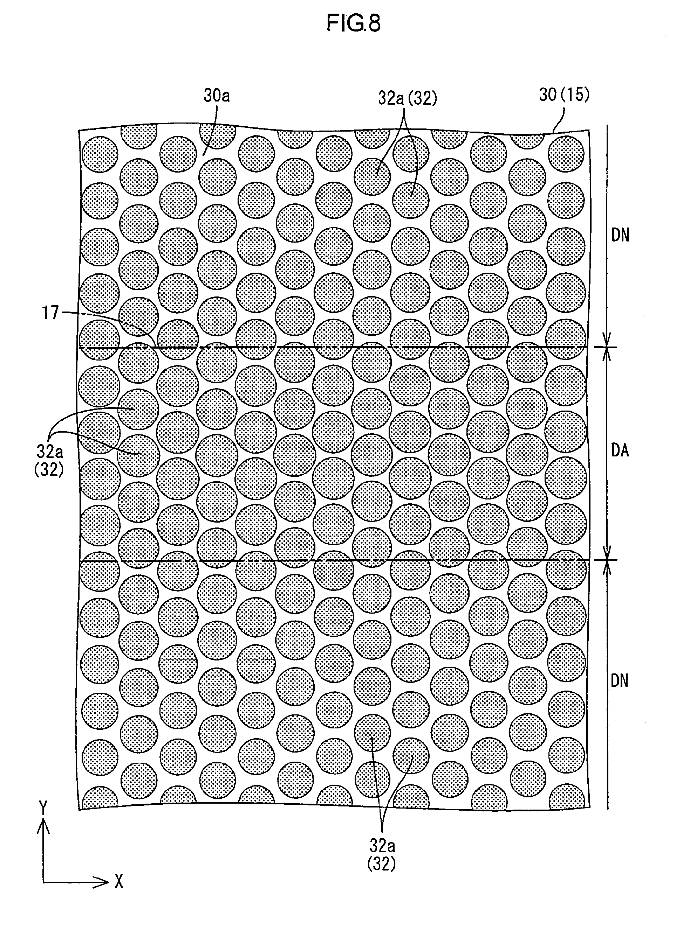

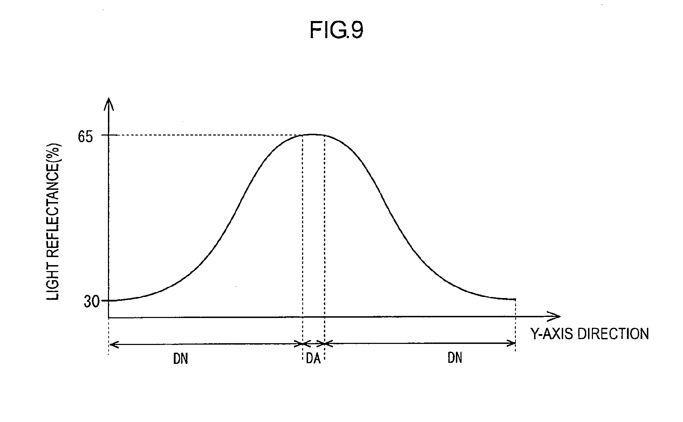

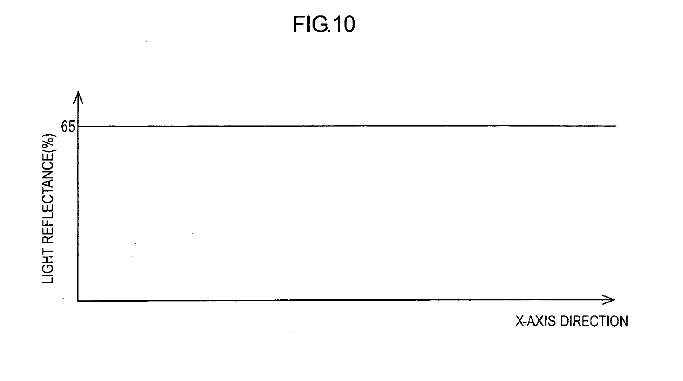

FIG. 7 is a plan view illustrating distribution of light reflectance of the diffuser plate 30. FIG. 8 is an enlarged plan view of major components illustrating a schematic configuration of a surface of the diffuser plate of FIG. 7 facing the hot cathode tube. FIG. 9 is a graph plotting a change in light reflectance of the diffuser plate of FIG. 7 in the short side direction thereof. FIG. 10 is a graph plotting a change in light reflectance of the diffuser plate of FIG. 7 in the long side direction thereof. In FIG. 9, the long side direction of the diffuser plate corresponds to the X-axis direction and the short side direction corresponds to the Y-axis direction. Also in FIG. 9, the horizontal axis corresponds to the Y-axis direction (short side direction), and the graph plots the light reflectance from the bottom side to the top side in FIG. 7 along the Y-axis direction. Similarly, in FIG. 10, the horizontal axis corresponds to the X-axis direction (long side direction), and the graph plots the light reflectance from the left end to the right end of FIG. 7 along the Y-axis direction.

The diffuser plate 30 is formed of an almost transparent synthetic resin base substrate (such as polystyrene) including a predetermined amount of diffusing particles dispersed therein. The diffusing particles disperse light. The diffuser plate 30 has a substantially uniform light transmittance and light reflectance throughout the substrate. Preferably, the base substrate of the diffuser plate 30 (without a light reflecting portion 32 which will be described later) may have light transmittance of about 70% and light reflectance of about 30%. The diffuser plate 30 includes a surface facing the hot cathode tube 17 (to be hereafter referred to as "a first surface 30a") and a surface located on the side opposite to the first surface 30a and facing the liquid crystal panel 11 (to be hereafter referred to as "a second surface 30b). The first surface 30a is configured to be a light-incident surface on which light from the hot cathode tube 17 is incident. The second surface 30b is configured to be a light output surface through which light (illumination light) is output toward the liquid crystal panel 11.

As illustrated in FIGS. 7 and 8, on the first surface 30a constituting the light-incident surface of the diffuser plate 30, there is formed a light reflecting portion 32 having a white dot pattern. Specifically, the light reflecting portion 32 is formed by a plurality of dots 32a having a circular shape in plan view and arranged in a zig-zag (staggered or alternately displaced) manner. The dot pattern constituting the light reflecting portion 32 may be formed by printing a paste containing a metal oxide, for example, on the surface of the diffuser plate 30 by screen printing, inkjet printing or the like. The light reflecting portion 32 itself may have light reflectance of about 75%, which is higher than the light reflectance in the plane of the diffuser plate 30, which is of about 30%. In accordance with the present embodiment, the light reflectance of the various materials are based on the average light reflectance measured in a measurement diameter by using CM-3700d from Konica Minolta, Inc., with LAV (measurement diameter φ 25.4 mm) . The light reflectance of the light reflecting portion 32 itself is a value obtained by measuring a surface of the light reflecting portion 32 formed on an entire surface of the glass substrate, by using the above measuring means.

The diffuser plate 30 has a long side direction (X-axis direction) and a short side direction (Y-axis direction). The dot pattern of the light reflecting portion 32 is varied such that the light reflectance on the first surface 30a of the diffuser plate 30 facing the hot cathode tube 17 is changed along the short side direction, as illustrated in FIG. 9 (see also FIGS. 7 and 8) . Namely, in the diffuser plate 30 illustrated in FIG. 7, the first surface 30a as a whole includes a portion overlapping with the hot cathode tube 17 (to be hereafter referred to as "a light source overlapping portion DA") whose light reflectance is higher than the light reflectance of a portion not overlapping with the hot cathode tube 17 (to be hereafter referred to as "a light source non-overlapping portions DN"). The light reflectance on the first surface 30a of the diffuser plate 30 is hardly changed and remains substantially uniform along the long side direction, as illustrated in FIG. 10 (see FIG. 7).

Distribution of light reflectance on the diffuser plate 30 will be described in detail. As illustrated in FIGS. 7 to 9, the light reflectance on the diffuser plate 30 is continuously decreased in a direction away from the hot cathode tube 17 and continuously increased in a direction toward the hot cathode tube 17 along the short side direction, where the distribution of the light reflectance is set to be the normal distribution (bell-shaped curve). Specifically, the light reflectance on the diffuser plate 30 is maximum at a middle position (corresponding to the center of the hot cathode tube 17) in the short side direction and minimum at both end positions in the short side direction. The maximum value of the light reflectance is about 65%, for example, and the minimum value of the same is about 30%, for example, which is equal to the light reflectance of the diffuser plate 30. Thus, at the end positions of the diffuser plate 30 in the short side direction, there is only a little or hardly any of the light reflecting portion 32.

In order to achieve the above distribution of light reflectance, the light reflecting portion 32 has the following structure. The area of each of the dots 32a constituting the light reflecting portion 32 is maximum at the middle position of the diffuser plate 30 in the short side direction. Namely, the dots at positions corresponding to the center of the hot cathode tube 17 in the short side direction have the maximum area. The area of the dots 32a is gradually decreased in a direction away from the middle position, and the dots 32a at the ends of the diffuser plate 30 in the short side direction have the minimum area. Thus, the area of the dots 32a is set to be smaller as their distance from the center of the hot cathode tube 17 increases. This structure allows the diffuser plate 30 as a whole to provide a gradual brightness distribution of the illumination light. Therefore, the backlight unit 12 as a whole can provide brightness having a gradual brightness distribution. Preferably, the light reflectance may be adjusted by changing the intervals between the dots 32a of the light reflecting portion 32 while the area of the dots 32a is kept uniform.

The operation of the structure according to the present embodiment will be described. When the liquid crystal display device 10 is used, the hot cathode tube 17 is turned on and emits light. The light emitted from the hot cathode tube 17 is incident on the first surface 30a of the diffuser plate 30 directly or indirectly after being reflected by the various members disposed within the chassis 14 (such as the holders 19, the reflection sheet 20, and the pressing members 21). The light is then transmitted through the diffuser plate 30 and is emitted through the optical sheet 31 toward the liquid crystal panel 11.

The indirect light travels toward the diffuser plate 30 mainly due to reflection by the reflection sheet 20 covering substantially the entire area within the chassis 14 (FIGS. 2 and 5). As illustrated in FIGS. 3 and 6, the rising portions 20b of the reflection sheet 20, which are disposed in the light source non-arrangement areas LN, are rising from the bottom portion 20a in the light source arrangement area LA toward the front side. Thus, the space between the rising portions 20b and the diffuser plate 30 is gradually decreased in a direction away from the proximal rising portion to the distal rising portion (i.e., in a direction away from the hot cathode tube 17). In other words, the space in which light can travel freely within the chassis 14 is made narrower. In this context, the amount of light within the chassis 14 tends to be inversely proportional to the distance from the hot cathode tube 17. Therefore, the amount of light tends to be smaller in the light source non-arrangement areas LN compared to the light source arrangement area LA. As a result, the light source non-arrangement areas LN tend to be darker. In accordance with the present embodiment, the space in which light can travel freely within the light source non-arrangement areas LN, which tend to have decreased amounts of light, is made narrower by the rising portions 20b. In addition, the rising portions 20b are angled such that the reflected light is directed toward the center of the screen. Thus, the light source non-arrangement areas LN are prevented from being visually recognized as darker portions. Further, the body portion 25 of the pressing member 21 has a size to press the rising portions 20b partially along the short side direction (Y-axis direction). Thus, compared to the configuration where the body portion has a size to press the rising portions 20b along their entire lengths, size reduction is achieved, and the surface area of the body portion 25 within the chassis 14 is smaller than that of the reflection sheet 20. Accordingly, even when the reflection sheet 20 and the pressing members 21 have different light reflectance, unevenness in light reflectance and reflected light in the chassis 14 is made difficult to occur.

Next, the light-reflecting function of the diffuser plate 30 will be described in detail. On the first surface 30a of the diffuser plate 30 on which the light from the hot cathode tube 17 is incident, the light reflecting portion 32 having different light reflectance in different areas within the plane is formed, as illustrated in FIG. 7. Therefore, the light incidence efficiency can be appropriately controlled on an area by area basis. Specifically, in the light source overlapping portion DA of the first surface 30a overlapping with the hot cathode tube 17, the amount of direct light from the hot cathode tube 17 is large. Therefore, the amount of light is greater than that in the light source non-overlapping portions DN. Thus, by relatively increasing the light reflectance of the light reflecting portion 32 in the light source overlapping portion DA (see FIGS. 7 and 9), incidence of light on the first surface 30a can be controlled (regulated) while a large amount of light can be reflected back into the chassis 14. On the other hand, in the light source non-overlapping portions DN of the first surface 30a not overlapping with the hot cathode tube 17, the amount of direct light from the hot cathode tube 17 is smaller. Thus, the amount of light is relatively smaller than in the light source overlapping portion DA. Therefore, by relatively decreasing the light reflectance of the light reflecting portion 32 in the light source non-overlapping portions DN (see FIGS. 7 and 9), incidence of light on the first surface 30a can be facilitated. At the same time, in the light source non-overlapping portions DN, the amount of light is compensated for by the light reflected by the light reflecting portion 32 in the light source overlapping portion DA back into the chassis 14 and guided by the reflection sheet 20, for example. Thus, a sufficient amount of light incident in the light source non-overlapping portions DN can be obtained.

When the hot cathode tube 17 is turned on or off, the temperature environment in the chassis 14 is varied and, as a result, thermal expansion or thermal contraction may occur in the reflection sheet 20 disposed in the chassis 14. The shape of the bottom portion 20a of the reflection sheet 20, which is disposed along the bottom plate 14a of the chassis 14, may be relatively stably maintained. However, the shape of the rising portions 20b may be relatively easily destabilized because of their inclination with respect to the bottom portion 20a and the gap C between the rising portions 20b and the bottom plate 14a, as illustrated in FIG. 6. Specifically, due to thermal expansion or thermal contraction of the reflection sheet 20, the rising portions 20b may be warped or flexure or otherwise deformed (displaced) so as to approach to the diffuser plate 30. In this respect, in accordance with the present embodiment, the body portion 25 of the pressing members 21 straddles the bottom portion 20a and the rising portions 20b, and also includes the pressing surface 28 pressing the bottom portion 20a and the rising portions 20b from the front side. Accordingly, the rising portions 20b is prevented from being deformed so as to approach to the diffuser plate 30.

Specifically, the bottom-portion pressing surface 28a of the bottom-portion pressing portion 25a constituting the body portion 25 is configured to press the bottom portion 20a along its entire length in the short side direction from the front side. The rising portion pressing surfaces 28b of the rising portion pressing portions 25b are configured to press the proximal rising portions of the rising portions 20b from the front side. Thus, the shape of the bottom portion 20a and the rising portions 20b can be stably maintained. In addition, the rising portion pressing portions 25b have substantially the same rising angle from the bottom-portion pressing portion 25a as the rising portion angle θ1 of the rising portions 20b from the bottom portion 20a. This allows the bottom portion 20a and the rising portions 20b to be more reliably pressed by the pressing surface 28. Further, the bottom portion 20a and the proximal rising portions of the rising portions 20b are pressed by the pressing members 21 at once, while the extending portions 20c are held between the receiving plates 14c and the diffuser plate 30. Thus, the portions of the rising portions 20b not pressed by the pressing members 21 can also be maintained in a proper shape. In this way, the shape of the bottom portion 20a and the rising portions 20b is stabilized, thereby stabilizing the directionality of the light reflected by the rising portions 20b. Accordingly, unevenness in the light emitted from the backlight unit 12 after irradiating the diffuser plate 30 is less likely to occur.

Next, the operation and effect of attaching the reflection sheet 20 and the pressing members 21 to the chassis 14 will be described.

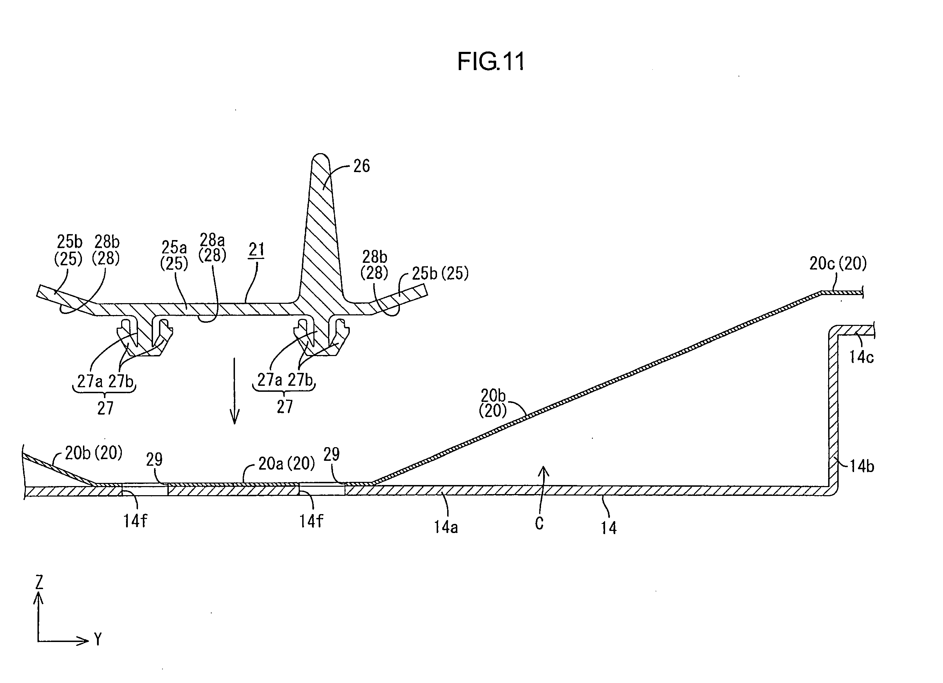

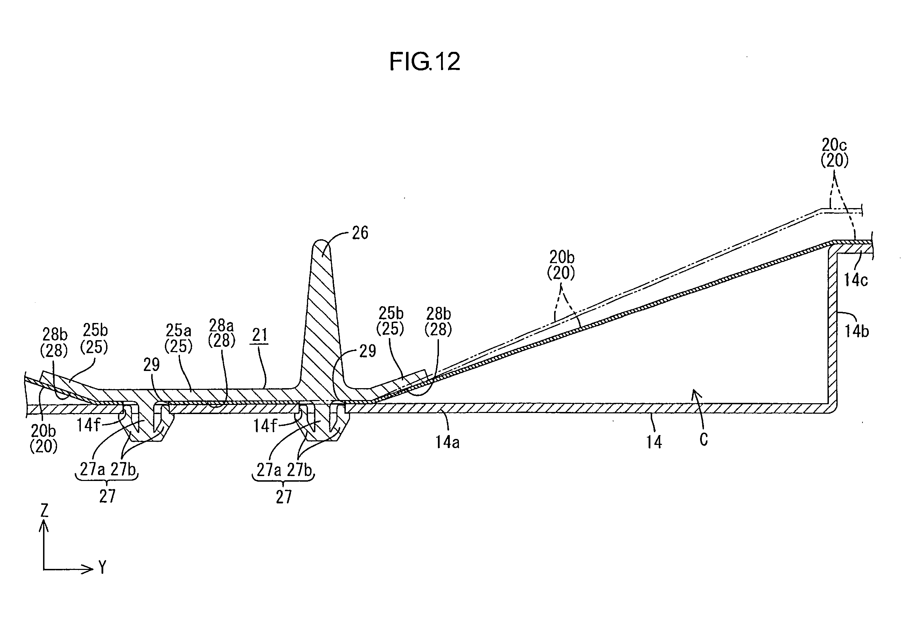

FIG. 11 is a cross section view taken along the short side direction of the backlight unit of FIG. 2, illustrating a state before the pressing member is attached. FIG. 12 is a cross section view taken along the short side direction of the backlight unit of FIG. 2, illustrating a state after the pressing member is attached.

The reflection sheet 20, prior to being attached within the chassis 14, has the rising portions 20b bent with respect to the bottom portion 20a and the extending portions 20c bent with respect to the rising portions 20b in advance. It may not be always easy to obtain constant bent angles at the various bent portions of the reflection sheet 20, and an excess or lack of bent angle may result. For example, as illustrated in FIG. 11, when the bent angle (rising angle) θ2 of the rising portion 20b with respect to the bottom portion 20a is larger than a set value, the gap C between the rising portion 20b and the bottom plate 20a may become excessively large, and the extending portion 20c may come to be floated above the receiving plates 14c. However, when the pressing member 21 is attached to the bottom plate 14a of the chassis 14, as illustrated in FIG. 12, the bottom portion 20a of the reflection sheet 20 is held between the bottom-portion pressing portion 25a of the body portion 25 of the pressing member 21 and the bottom plate 14a, while the rising portion 20b is pressed by the rising portion pressing portion 25b (rising portion pressing surface 28b) of the body portion 25 from the front side. At this time, the rising portion 20b is displaced by the rising portion pressing portion 25b toward the bottom plate 14a, with the rising angle from the bottom portion 20a returned from θ2 to θ1. Namely, the shape of the rising portion 20b can be corrected to a desired state by the pressing member 21. In FIG. 12, the rising portion 20b and the extending portion 20c prior to correction are illustrated with two-dot chain lines. When the rising angle of the rising portion 20b with respect to the bottom portion 20a is smaller than the set value, correction is made when the extending portion 20c is placed on the receiving plate 14c.

As described above, the backlight unit 12 according to the present embodiment includes the hot cathode tube 17 as a light source; the chassis 14 including the bottom plate 14a disposed on the side opposite to the light output side with respect to the hot cathode tube 17 and housing the hot cathode tube 17; the reflection sheet 20 including the bottom portion 20a disposed along the bottom plate 14a and the rising portions 20b rising from the bottom portion 20a toward the light output side, the reflection sheet 20 configured to reflect light; and the pressing members 21 extending over the bottom portion 20a and the rising portions 20b and including the pressing surface 28 pressing the bottom portion 20a and the rising portions 20b from the light output side.

Because the rising portions 20b of the reflection sheet 20 are rising from the bottom portion 20a toward the light output side, the shape of the rising portions 20b may be readily destabilized by a change in their rising angle from the bottom portion 20a or deformation such as warpage or flexure. In this respect, in accordance with the present embodiment, the pressing members 21 include the pressing surface 28 extending over the bottom portion 20a and the rising portions 20b of the reflection sheet 20. The pressing surface 28 is configured to press the bottom portion 20a and the rising portions 20b from the light output side. Therefore, the rising portions 20b is prevented from being displaced toward the light output side. Thus, variation in the rising angle of the rising portions 20b with respect to the bottom portion 20a and deformation such as warpage or flexure in the rising portions 20b can be prevented. Accordingly, the shape of the rising portions 20b can be stably maintained, and the directionality of light reflected by the rising portions 20b can be stabilized. In this way, unevenness in light emitted from the backlight unit 12 is made difficult to occur.

The bottom plate 14a of the chassis 14 is formed to extend over the area overlapping with the rising portions 20b in plan view. Thus, the area of forming the bottom plate 14a is greater than in the configuration where the bottom plate is to be disposed in an area overlapping only with the bottom portion 20a in plan view. Accordingly, additional components may be mounted by taking advantage of the increased area of forming the bottom plate 14a. On the other hand, while there is the gap C between the rising portions 20b rising from the bottom portion 20a and the bottom plate 14a which tends to destabilize the shape of the rising portions 20b, the rising portions 20b can be maintained in an appropriate shape by the pressing surface 28.

At the end portions of the bottom plate 14a, the side plates 14b rising toward the light output side are provided. At the rising end portions of the side plates 14b, the receiving plates 14c extending outward are provided. At the rising end portions of the rising portions 20b, the extending portions 20c extending along the receiving plates 14c are provided. Thus, the bottom portion 20a of the reflection sheet 20 is disposed along the bottom plate 14a, while the extending portions 20c are disposed along the receiving plates 14c. Therefore, the shape of the rising portions 20b located between the bottom portion 20a and the extending portions 20c can be stabilized.

The rising angle of the rising portions 20b from the bottom portion 20a may be an acute angle. In this way, light reflected by the rising portions 20b can be angled in accordance with the rising angle from the bottom portion 20a. When the rising angle is an acute angle, the light can be emitted in an appropriate manner.

The pressing surface 28 of the pressing members 21 has a bent shape generally conforming to the outer shape of the bottom portion 20a and the rising portions 20b, with the bent angle of the pressing surface 28 substantially equal to the rising angle of the rising portions 20b with respect to the bottom portion 20a. Thus, the bottom portion 20a and the rising portions 20b can be reliably pressed by the pressing surface 28 of the pressing members 21 from the light output side. Therefore, improved shape stability can be obtained.

Further, the pressing members 21 are formed such that the pressing surface 28 can press the rising portions 20b partially in the direction from the bottom portion 20a to the rising portions 20b. Thus, the pressing members 21 can be reduced in size compared to the configuration where the pressing members press the rising portions 20b along their entire lengths. Accordingly, even when the reflection sheet 20 and the pressing members 21 have different light reflectance, uneven light reflectance within the chassis 14 can be made difficult to occur.

The rising portions 20b are inclined with respect to the bottom portion 20a. Therefore, the inclined rising portions 20b can be appropriately pressed by the pressing members 21 from the light output side.

The chassis 14 includes the light source arrangement area LA in which the hot cathode tube 17 is disposed, and the light source non-arrangement areas LN in which the hot cathode tube 17 is not disposed. Because of the light source non-arrangement areas LN set in the chassis 14 where the hot cathode tube 17 is not disposed, the number of the hot cathode tubes 17 can be reduced compared to the configuration where a number of the hot cathode tubes 17 are disposed uniformly throughout the chassis 14. Thus, cost reduction and decrease in power consumption in the backlight unit 12 can be achieved.

The chassis 14 also includes at least the first end portion 14A, the second end portion 14B on the end portion opposite to the first end portion 14A, and the middle portion 14C located between the first end portion 14A and the second end portion 14B. The middle portion 14C corresponds to the light source arrangement area LA, and the first end portion 14A and the second end portion 14B correspond to the light source non-arrangement areas LN. In this way, sufficient brightness can be obtained in the middle portion of the backlight unit 12. Thus, sufficient brightness can also be obtained in a display middle portion of the liquid crystal display device 10 provided with the backlight unit 12. Therefore, good visibility can be obtained.

While at least a part of the bottom portion 20a is disposed in the light source arrangement area LA, at least a part of the rising portions 20b is disposed in the light source non-arrangement areas LN. The amount of light in the chassis 14 tends to be smaller in the light source non-arrangement areas LN than the amount of light in the light source arrangement area LA. However, because the rising portions 20b rising from the bottom portion 20a toward the light output side are disposed in the light source non-arrangement areas LN, darkening of the light source non-arrangement areas LN is made difficult to occur. Thus, uneven brightness can be prevented.

Further, there is provided the optical member 15 disposed on the light output side with respect to the hot cathode tube 17. The diffuser plate 30 constituting the optical member 15 includes the first surface 30a facing the hot cathode tube 17. Light reflectance on at least the first surface 30a of the diffuser plate 30 is greater in the portions overlapping with the light source non-arrangement areas LN (light source non-overlapping portions DN) than in the portion overlapping with the light source arrangement area LA (light source overlapping portion DA). Because the light emitted from the hot cathode tube 17 first reaches the portion of the optical member 15 having the relatively high light reflectance, most of the light is reflected (i.e., not transmitted). Therefore, brightness of the illumination light is restrained with respect to the amount of light emitted from the hot cathode tube 17. The reflected light is reflected within the chassis 14 and made to reach the light source non-arrangement areas LN. The portions of the optical member 15 overlapping with the light source non-arrangement areas LN have relatively small light reflectance and therefore transmit more light, thereby providing a predetermined brightness of the illumination light.

The light reflectance on at least the first surface 30a of the diffuser plate 30 facing the hot cathode tube 17 is decreased in a direction away from the hot cathode tube 17. In this way, even brightness of the illumination light can be obtained between the light source arrangement area LA and the light source non-arrangement areas LN.

The optical member 15 is disposed on the light output side with respect to the hot cathode tube 17, and the pressing members 21 include the support portions 26 protruding toward the light output side and supporting the optical member 15. Thus, the pressing members 21 also provide the function of supporting the optical member 15.

The pressing members 21 include the attaching portions 27 protruding toward the side opposite to the light output side and attached to the bottom plate 14a. The support portions 26 and the attaching portions 27 are disposed at positions overlapping with each other in plan view. Thus, improved attaching workability is obtained.

The pressing members 21 include the attaching portions 27 protruding on the side opposite to the light output side and attached to the bottom plate 14a, and have an elongated shape as a whole. Specifically, a plurality of the attaching portions 27 is disposed along the long side direction of the pressing members 21. In this way, the pressing members 21 can be attached to the chassis 14 stably. Thus, the pressing members 21 can stably press the reflection sheet 20.

The pressing members 21 are also formed such that the pressing surface 28 is disposed along the entire length of the bottom portion 20a in one direction (Y-axis direction). In this way, the bottom portion 20a and the rising portions 20b can be stably pressed by the pressing members 21.

At least a pair of the rising portions 20b is disposed at positions sandwiching the bottom portion 20a, and the pressing members 21 are formed such that the pressing surface 28 straddles the bottom portion 20a and at least the pair of the rising portions 20b. In this way, at least the pair of the rising portions 20b disposed at positions sandwiching the bottom portion 20a can be pressed at once by the single pressing members 21. Thus, the number of the pressing members 21 used can be reduced. Accordingly, the number of components and the number of assembly steps can be reduced. Therefore, cost reduction and improvements in workability can be achieved.

The pressing members 21 may have a symmetrical shape with respect to the middle position of the pair of the rising portions 20b. In this way, the pair of the rising portions 20b can be substantially uniformly pressed by the pressing members 21. Therefore, the shape stability of the rising portions 20b can further be improved.

The pressing members 21 may have a white surface. In this way, light can be well reflected by the surface of the pressing members 21. Therefore, light emitted from the hot cathode tube 17 can be effectively utilized.

Further, the light source may be the hot cathode tube 17. In this way, high brightness can be obtained.

While the first embodiment of the present invention has been described above, the present invention is not limited to the foregoing embodiment and may include modifications described below. In the following modifications, members similar to those of the foregoing embodiment will be designated with similar reference numerals or signs, and their illustration or description may be omitted.

### <First modification of the first embodiment>

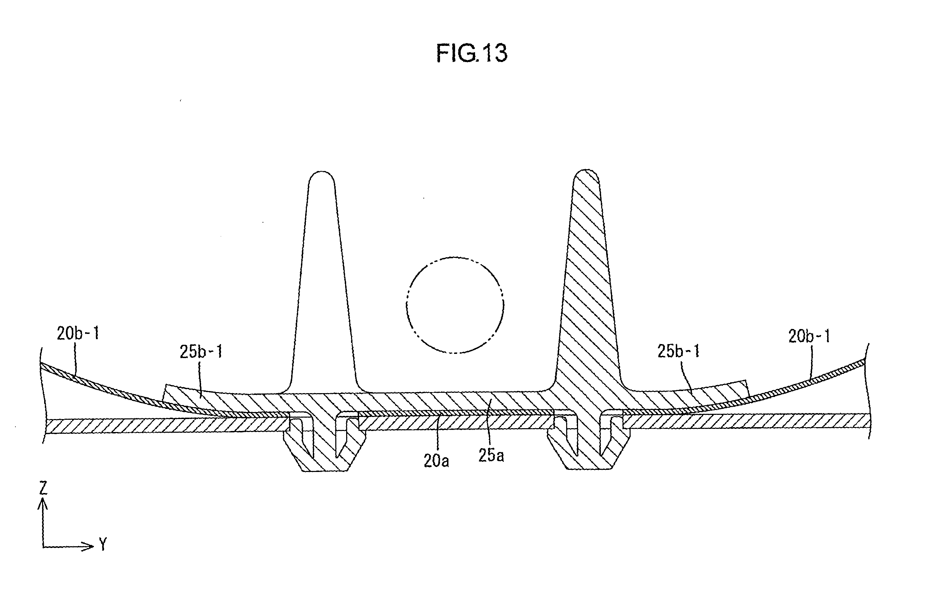

A first modification of the first embodiment will be described with reference to FIG. 13, in which the shape of rising portions 20b-1 and rising portion pressing portions 25b-1 is modified. FIG. 13 is an enlarged cross section view of major components of a pressing member and a reflection sheet according to the present modification.

As illustrated in FIG. 13, the rising portions 20b-1 and the rising portion pressing portions 25b-1 are substantially arc-shaped (bow-shaped) in cross section. Specifically, the rising portions 20b-1 are substantially arc-shaped or warped toward the back side, such that each of the rising portions 20b-1 as a whole is located closer to the bottom plate 14a than the line (chord) connecting the proximal rising portion and the distal rising portion of the rising portion. The rising portions 20b-1 may have a rising angle from the bottom portion 20a that is substantially the same as that of the first embodiment. The rising angle herein refers to the angle formed by a tangent at the proximal rising portion of the rising portion 20b-1 with respect to the bottom portion 20a. On the other hand, the rising portion pressing portions 25b-1 have a cross-sectional shape with substantially the same curvature as the rising portions 20b-1. Thus, the rising portion pressing portions 25b-1 have substantially the same rising angle from the bottom-portion pressing portion 25a as the rising angle of the rising portions 20b-1. Accordingly, even when the rising portions 20b-1 are curved in arc-shape, the rising portions 25b-1 can be maintained in an appropriate shape by forming the rising portion pressing portions 25b-1 in the same shape.

### <Second modification of the first embodiment>

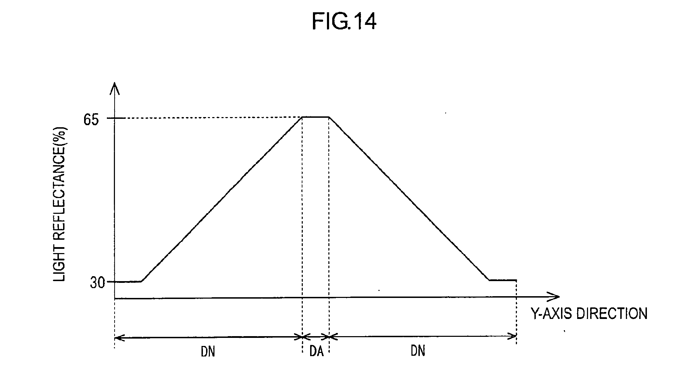

A second modification of the first embodiment will be described with reference to FIG. 14, in which the distribution of the light reflectance on the first surface 30a of the diffuser plate 30 is modified. FIG. 14 is a graph plotting a change in light reflectance of the diffuser plate according to the present modification in the short side direction.

As illustrated in FIG. 14, in the light source overlapping portion DA, light reflectance on the first surface 30a of the diffuser plate 30 may be substantially uniform at 65% representing a maximum value in the diffuser plate 30. On the other hand, in the light source non-overlapping portions DN, light reflectance is continuously and gradually decreased from the side closer to the light source overlapping portion DA toward the side away from the light source overlapping portion DA (i.e., varied in a slope), reaching a minimum value of 30% at the end portions of the diffuser plate 30 in the short side direction (Y-axis direction). The dots 32a constituting the light reflecting portion 32 have the same and maximum area in the light source overlapping portion DA, while the dots 32a in the light source non-overlapping portions DN are formed to have areas continuously and gradually decreased in inverse proportion to the distance from the light source overlapping portion DA.

### <Third modification of the first embodiment>

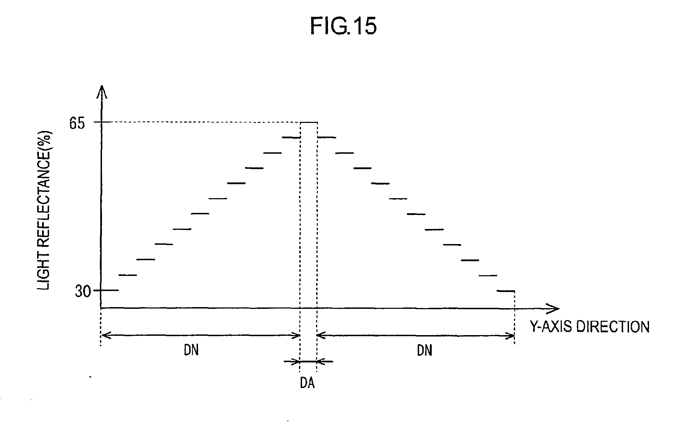

A third modification of the first embodiment will be described with reference to FIG. 15, in which distribution of the light reflectance on the first surface 30a of the diffuser plate 30 is further modified. FIG. 15 is a graph plotting a change in light reflectance of the diffuser plate according to the present modification in the short side direction.

As illustrated in FIG. 15, the light reflecting portion 32 is formed such that light reflectance in the plane of the first surface 30a of the diffuser plate 30 is successively decreased in steps from the light source overlapping portion DA to the light source non-overlapping portions DN. Namely, the area of the individual dots 32a (light reflectance) constituting the light reflecting portion 32 is maximum and uniform in the light source overlapping portion DA, while the area is decreased in predetermined successive regions in steps in a direction away from the light source overlapping portion DA and is minimum at both end portions of the diffuser plate 30 in the short side direction (Y-axis direction). That is, in the light source non-overlapping portions DN of the light reflecting portion 32, the light reflectance is changed in stripes along the short side direction (Y-axis direction) of the diffuser plate 30. This configuration provides a gradual brightness distribution of the illumination light from the diffuser plate 30. The diffuser plate 30 including such regions with the light reflectance varied in steps can be manufactured by a simple method, thus contributing to cost reduction.

### <Second embodiment>

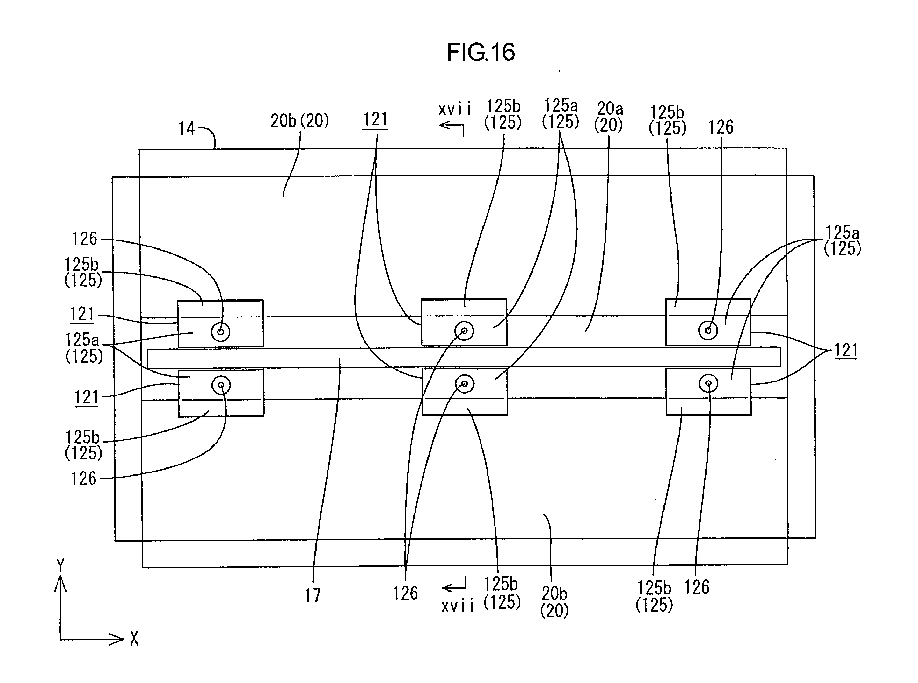

A second embodiment of the present invention will be described with reference to FIGS. 16 to 18. According to the second embodiment, the shape of the pressing members is modified. Redundant description of structures, operation, or effects similar to those of the first embodiment will be omitted.

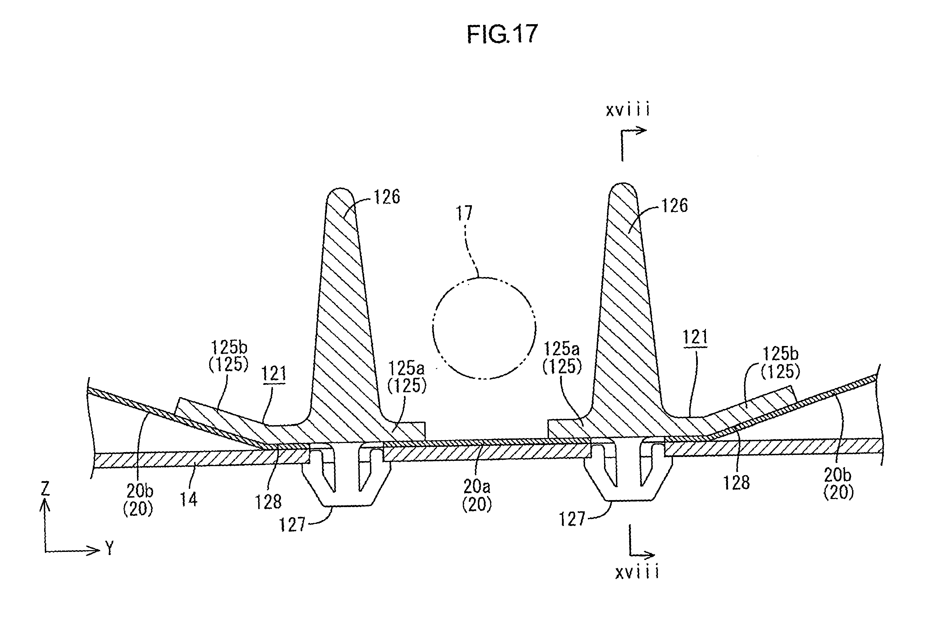

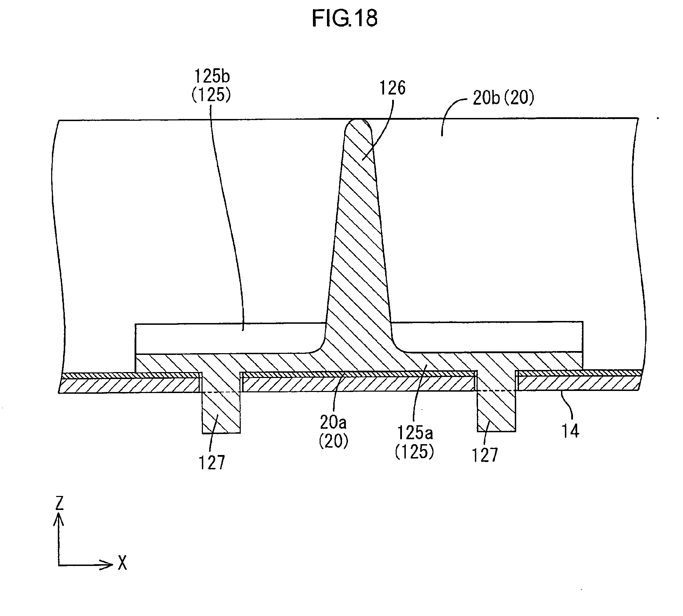

FIG. 16 is a plan view illustrating a layout of the hot cathode tube and the pressing members in the chassis. FIG. 17 is a cross section view taken along line xvii-xvii of FIG. 16. FIG. 18 is a cross section view taken along line xviii-xviii of FIG. 17.

As illustrated in FIGS. 16 and 17, three pairs of the pressing members 121 are disposed in the chassis 14, each pair at positions sandwiching the hot cathode tube 17 in the short side direction (Y-axis direction). Specifically, one pair is disposed at a middle position and the other two pairs at both end positions in the long side direction (X-axis direction) in the chassis 14. The pressing members 121 include body portions 125 disposed in the chassis 14. The body portions 125 are rectangular (elongated) in plan view, with the long side direction aligned with the X-axis direction (the long side direction of the chassis 14 and the reflection sheet 20) and the short side direction aligned with the Y-axis direction (the short side direction of the chassis 14 and the reflection sheet 20). The body portion 125 includes a bottom-portion pressing portion 125a at one end portion closer to the hot cathode tube 17, the bottom-portion pressing portion 125a overlapping with a part of the bottom portion 20a in plan view. The body portion 125 also includes a rising portion pressing portion 125b on the other end portion opposite to the hot cathode tube 17, the rising portion pressing portion 125b overlapping with a part of the rising portion 20b in plan view. Namely, the rising portion pressing portion 125b of the body portion 125 is rising from only one end of the bottom-portion pressing portion 125a. The body portion 125 also includes a pressing surface 128 extending over the bottom portion 20a and one of the rising portions 20b. Thus, the body portion 125 has an asymmetrical shape with respect to the Y-axis direction. Accordingly, a pair of the rising portions 20b is individually pressed by a pair of the pressing members 121 disposed sandwiching the hot cathode tube 17.

Specifically, the bottom-portion pressing portion 125a has a short side dimension smaller (such as about one third) than the short side dimension of the bottom portion 20a. Therefore, the bottom-portion pressing portion 125a can press only one end portion of the bottom portion 20a in the short side direction. The bottom-portion pressing portion 125a are not overlapping with the hot cathode tube 17 in plan view. Thus, the body portions 125 of the pair of the pressing members 121 disposed at positions sandwiching the hot cathode tube 17 are smaller than the body portion 25 of the pressing members 21 according to the first embodiment with respect to the Y-axis direction (see FIG. 6). The bottom-portion pressing portion 125a may have a long side dimension similar to the short side dimension of the bottom portion 20a. On the other hand, the rising portion pressing portions 125b are each continuous with the long side end portion of the bottom-portion pressing portion 125a on the side opposite to the hot cathode tube 17. The rising portion pressing portions 125b have substantially the same rising angle as the rising angle of the rising portions 20b rising from the bottom portion 20a.

As illustrated in FIGS. 17 and 18, support portions 126 are disposed at substantially the center of the bottom-portion pressing portions 125a in the long side direction (X-axis direction). Attaching portions 127 are disposed at both end positions of the bottom-portion pressing portion 125a in the long side direction where the attaching portions 127 are not overlapping with the support portions 126 in plan view.

As described above, in accordance with the present embodiment, the pressing members 121 are formed such that the pressing surfaces 128 are disposed on the bottom portion 20a partially in one direction. In this way, compared to the configuration where the pressing members are disposed on the bottom portion 20a along its entire length in one direction, the pressing members 121 can be reduced in size. Thus, the ratio of the surface area of the pressing members 121 to the surface area of the reflection sheet 20 can be reduced. Accordingly, even when the reflection sheet 20 and the pressing members 121 have different light reflectance, uneven light reflectance in the chassis 14 can be made difficult to occur.

At least one pair of the rising portions 20b is disposed at positions sandwiching the bottom portion 20a, and at least one pair of the pressing members 121 is provided for the corresponding pair of the rising portions 20b. In this way, at least one pair of the rising portions 20b disposed at positions sandwiching the bottom portion 20a can be pressed by the corresponding pair of the pressing members 121.

While the second embodiment of the present invention has been described above, the present invention is not limited to the foregoing embodiment and may include the following modifications. In the following modifications, members similar to those of the foregoing embodiment may be designated with similar reference numerals or signs with their description omitted.

### <First modification of the second embodiment>

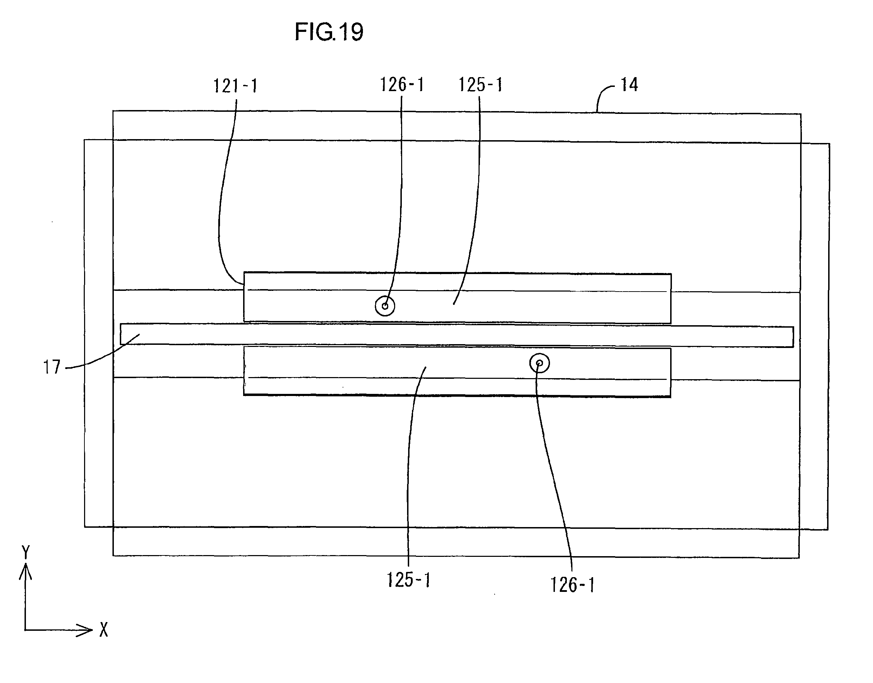

A first modification of the second embodiment will be described with reference to FIG. 19 in which the number of pressing members 121-1 and the size of a body portion 125-1 are modified. FIG. 19 is a plan view illustrating a layout of the hot cathode tube and the pressing members in the chassis.

As illustrated in FIG. 19, a pair of the pressing members 121-1 is disposed in parallel at positions sandwiching the hot cathode tube 17 in the Y-axis direction. The body portions 125-1 have a long side dimension greater than one half the long side dimension of the chassis 14. The pressing members 121-1 are disposed at a middle position of the chassis 14 in the long side direction. Support portions 126-1 are disposed on the body portions 125-1 at eccentric positions in the long side direction. The pair of the pressing members 121-1 has the same shape and is attached to the chassis 14 with the support portions 126-1 displaced from each other in the X-axis direction.

### <Third embodiment>

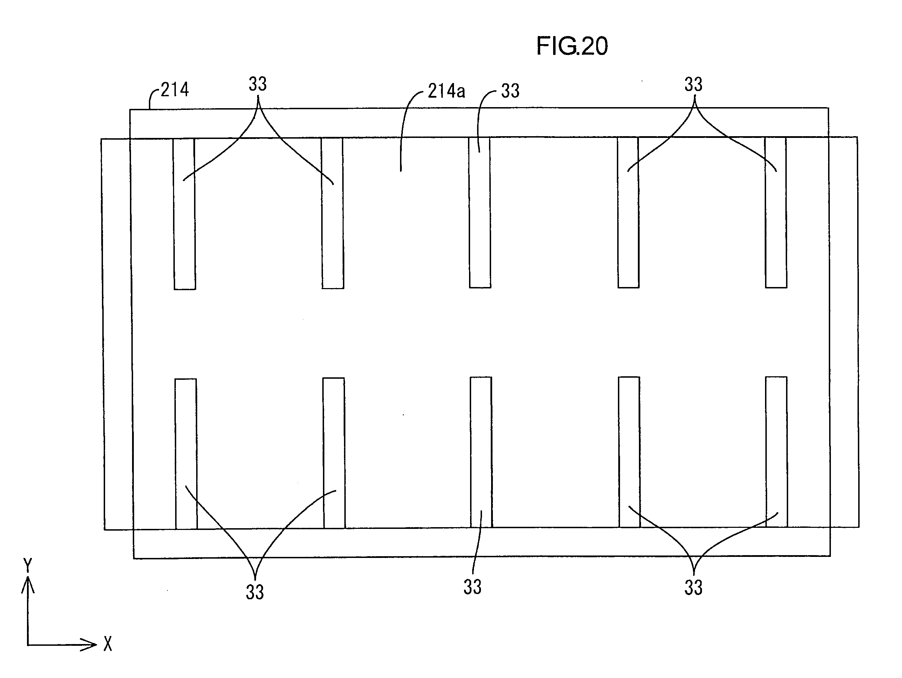

A third embodiment of the present invention will be described with reference to FIGS. 20 to 22. In the third embodiment, the shape of a chassis 214 is modified. In accordance with the present embodiment, the pressing members 21 according to the first embodiment are used. Redundant description of structures, operation, or effects similar to those according to the first embodiment will be omitted.

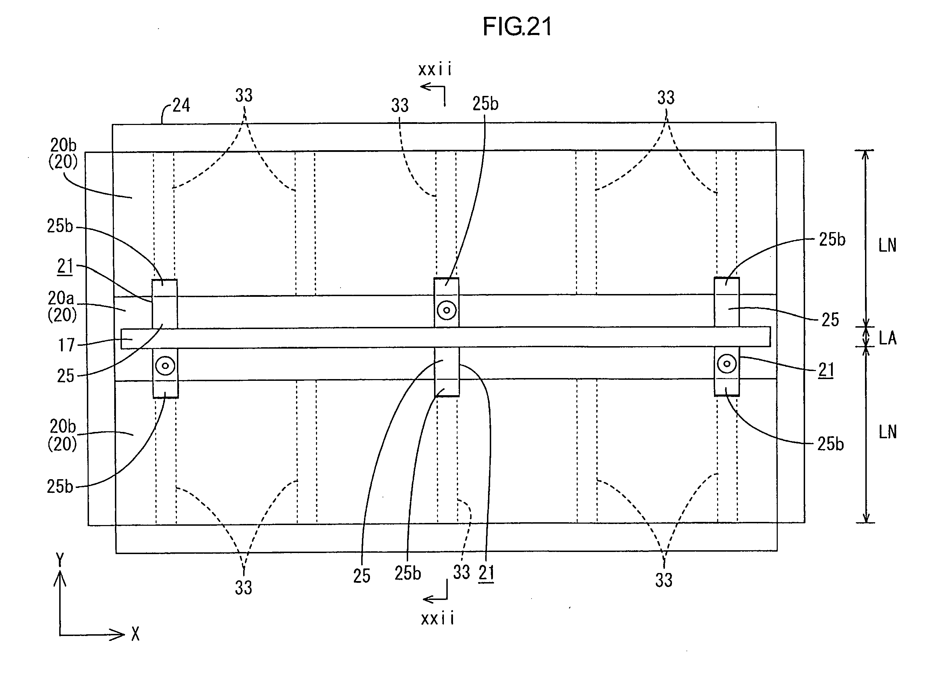

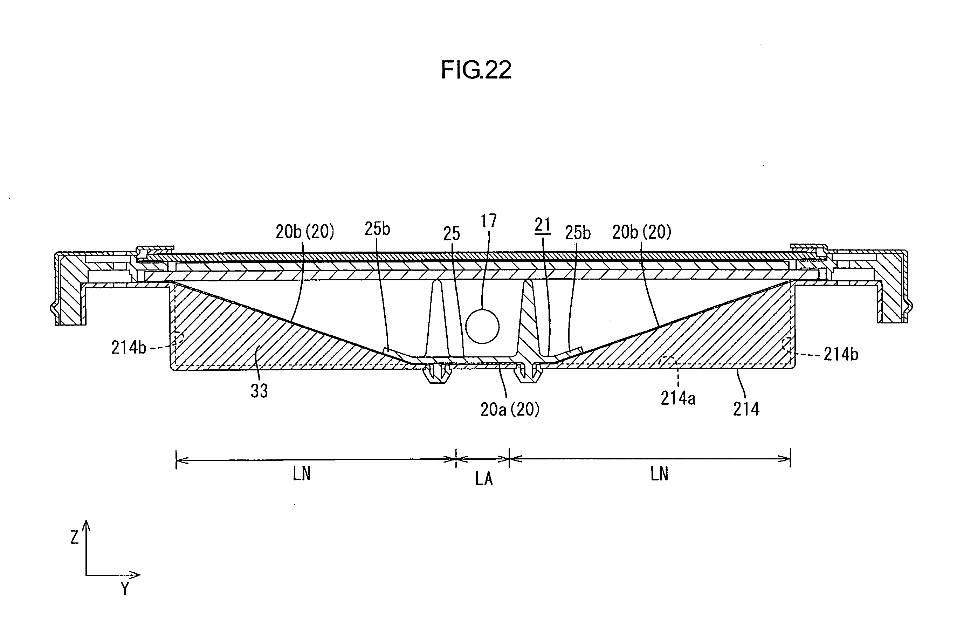

FIG. 20 is a plan view of the chassis. FIG. 21 is a plan view illustrating a layout of the hot cathode tube and the pressing members in the chassis. FIG. 22 is a cross section view taken along line xxii-xxii of FIG. 21.

As illustrated in FIGS. 20 and 22, the chassis 214 includes receiving portions 33 configured to receive the rising portions 20b of the reflection sheet 20 from the back side (opposite to the light output side). The receiving portions 33 are rib-shaped, rising from a bottom plate 214a toward the front side. The receiving portions 33 are disposed on the bottom plate 214a at positions overlapping with the rising portions 20b in plan view, i.e., in the light source non-arrangement areas LN. Five receiving portions 33 are disposed in each of the light source non-arrangement areas LN at substantially uniform intervals (pitch) in the X-axis direction. The receiving portions 33 located at the center in the X-axis direction are disposed at the middle position of the chassis 214 in the long side direction. The receiving portions 33 have a substantially triangular cross section taken along the Y-axis direction. Namely, the receiving portions 33 have a cross-sectional shape conforming to the space (gap C) enclosed by the rising portions 20b, the bottom plate 214a, and side plates 214b (FIG. 22). The receiving portions 33 have a rising angle from the bottom plate 214a in the Y-axis direction that is substantially the same as the rising angle of the rising portions 20b from the bottom portion 20a. Thus, there is almost no gap between the rising portions 20b and the receiving portions 33. The gap C is provided between the rising portions 20b and the bottom plate 214a in the area of the rising portions 20b not overlapping with the receiving portions 33 in plan view.

As illustrated in FIGS. 21 and 22, the pressing members 21 are disposed at positions overlapping with the receiving portions 33 in plan view. Specifically, three pressing members 21 are disposed, one overlapping with the receiving portions 33 at the center of the chassis 214 and the other two overlapping with the receiving portions 33 at the ends in the long side direction in plan view. Thus, the rising portions 20b can be held between the rising portion pressing portions 25b of the body portion 25 of the pressing members 21 and the receiving portions 33. In this way, the rising portions 20b can be pressed from both the front side and the back side. Therefore, the shape of the rising portions 20b can be more stably maintained. In addition, by providing the rib-shaped receiving portions 33 in the chassis 214, the chassis 214 can be reinforced.

Thus, in accordance with the present embodiment, the receiving portions 33 are provided between the bottom plate 214a and the rising portions 20b, the receiving portions 33 being configured to receive the rising portions 20b from the side opposite to the light output side. In this way, the rising portions 20b can be held between the receiving portions 33 and the pressing members 21. Thus, the shape of the rising portion 21b can be more stably maintained.

### <Fourth embodiment>

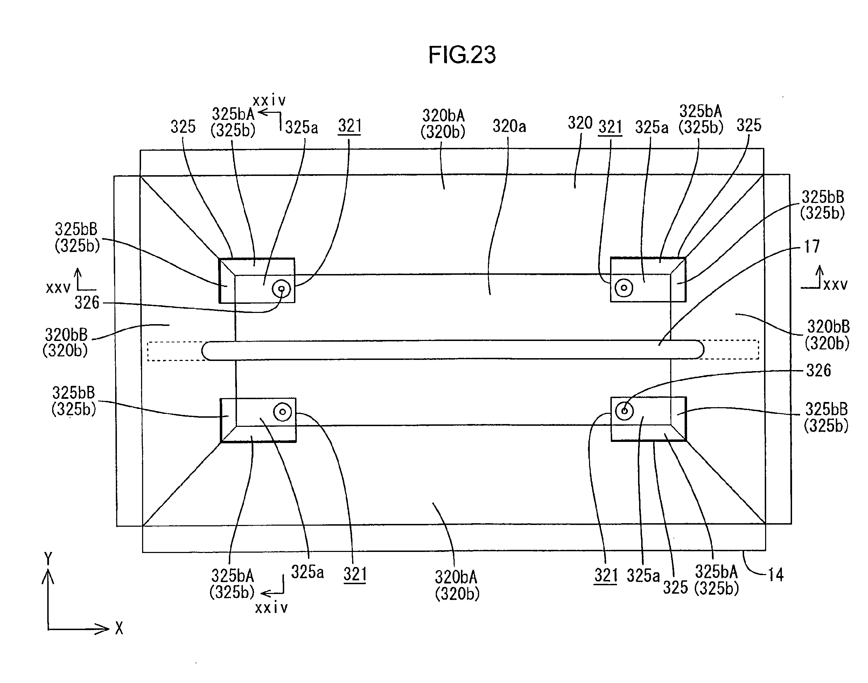

A fourth embodiment according to the present invention will be described with reference to FIGS. 23 to 25. In the fourth embodiment, the shape of a reflection sheet 320 and the shape of pressing members 321 are modified. Redundant description of structures, operation, or effects similar to those according to the first embodiment will be omitted.

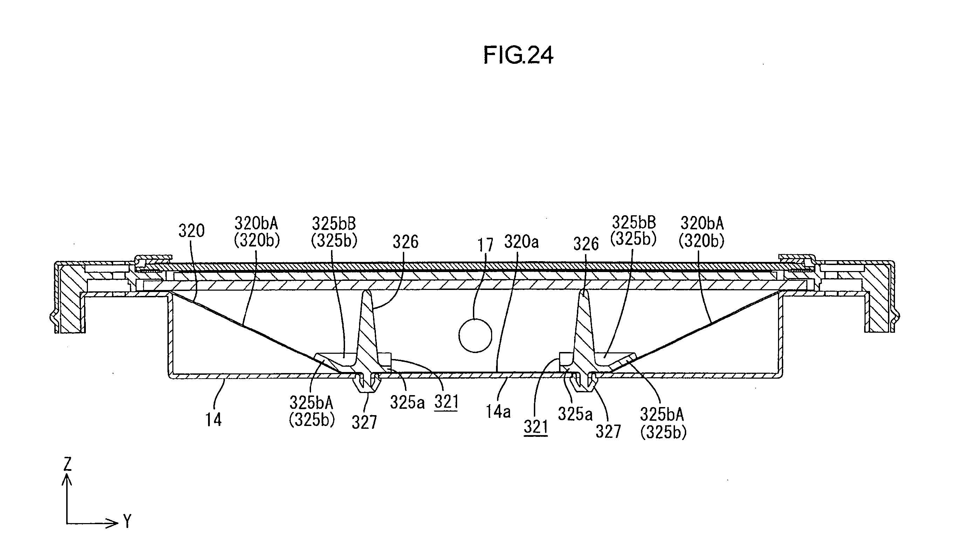

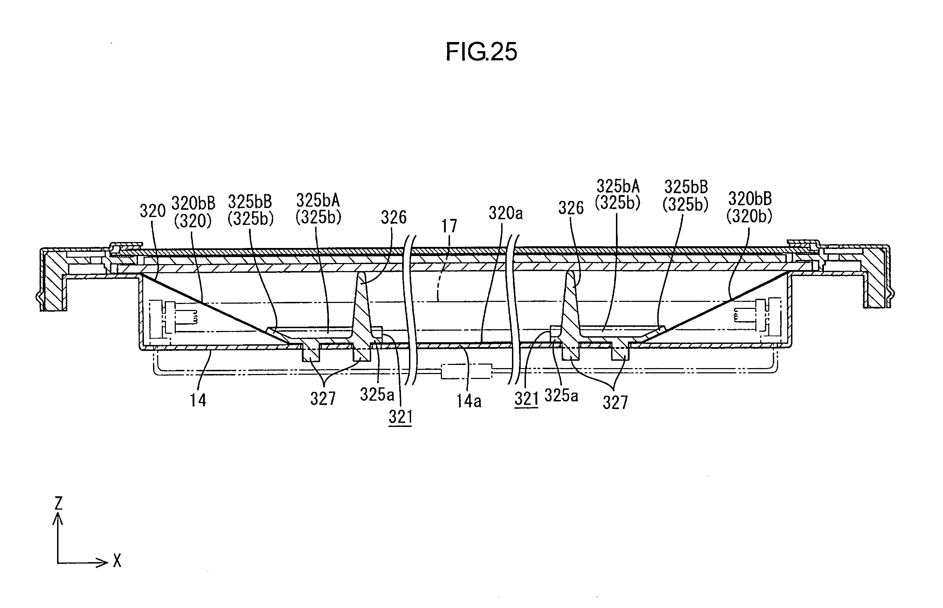

FIG. 23 is a plan view illustrating a layout of the hot cathode tube and the pressing members in the chassis. FIG. 24 is a cross section view taken along line xxiv-xxiv of FIG. 23. FIG. 25 is a cross section view taken along line xxv-xxv of FIG. 23.

As illustrated in FIGS. 23 to 25, the reflection sheet 320 is bowl-shaped as a whole. The reflection sheet 320 includes a bottom portion 320a disposed at the center of the bottom plate 14a of the chassis 14, and a total of four rising portions 320b. The four rising portions 320b are rising from the end portions on the long sides and the short sides of the bottom portion 320a. Specifically, the rising portions 320b include a pair of first rising portions 320bA and a pair of second rising portions 320bB. The first rising portions 320bA are rising from the end portions in the long sides of the bottom portion 320a and disposed at positions sandwiching the bottom portion 320a along the Y-axis direction. The second rising portions 320bB are rising from the end portions in the short sides of the bottom portion 320a and disposed at positions sandwiching the bottom portion 320a along the X-axis direction and are adjacent to the first rising portions 320bA. The first rising portions 320bA and the second rising portions 320b are inclined from the bottom portion 320a with predetermined rising angles. The first rising portions 320bA and the second rising portions 320bB are continuous with one another and bend at their boundary positions.

The pressing members 321 are disposed at the four corners of the bottom portion 320a. The pressing members 321 have a rectangular (elongated) shape in plan view and include a body portion 325 with a long side direction aligned with the X-axis direction and a short side direction aligned with the Y-axis direction. The body portion 325 includes a bottom-portion pressing portion 325a and a rising portion pressing portions 325b. The rising portion pressing portions 325b are rising from the end portions in the long side and the short side of the bottom-portion pressing portion 325a and include a pressing surface 328 pressing the rising portions 320b. The rising portion pressing portion 325b includes a first rising portion pressing portion 325bA and a second rising portion pressing portion 320bB. The first rising portion pressing portion 325bA is rising from the bottom-portion pressing portion 325a along the Y-axis direction and includes a first pressing surface 328A pressing the first rising portions 320bA. The first rising portion pressing portion 325bB is rising along the X-axis direction and includes a second pressing surface 328B pressing the second rising portions 320bB. The first rising portion pressing portion 325bA has a rising angle from the bottom-portion pressing portion 325a which is substantially the same as the rising angle of the first rising portions 320bA from the bottom portion 320a. The second rising portion pressing portion 325b has a rising angle from the bottom-portion pressing portion 325a which is substantially the same as the rising angle of the second rising portions 320bB from the bottom portion 320a. The first rising portion pressing portion 325bA and the second rising portion pressing portion 325bB are continuous with each other with a bent angle at their boundary position which is substantially the same as a bent angle at the boundary position between the first rising portions 320bA and the second rising portions 320bB. Thus, the first rising portion 320bA and the second rising portion 320bB adjacent to each other can be pressed at once by the single pressing member 321.

At both end portions of the bottom-portion pressing portion 325a in the long side direction, a pair of attaching portions 327 is provided. A support portion 326 is provided on the bottom-portion pressing portion 325a at a position overlapping with one of the attaching portions 327 closer to the center of the chassis 14 in plan view.

Thus, in accordance with the present embodiment, the bottom portion 320a is disposed at the center of the reflection sheet 320. The rising portions 320b are formed by a pair of the first rising portions 320bA disposed at positions sandwiching the bottom portion 320a and a pair of the second rising portions 320bB disposed at positions sandwiching the bottom portions 320a and adjacent to the first rising portions 320bA. The pressing members 321 are disposed at the corners of the bottom portion 320a, and the pressing surface 328 is formed by the first pressing surface 328A pressing the first rising portion 320bA and the second pressing surface 328B pressing the second rising portion 320bB, where the first pressing surface 328A and the second pressing surface 328B are continuous with each other. In this way, the first rising portions 320bA and the second rising portions 320bB adjacent to each other can be pressed at once by the pressing members 321.

### <Fifth embodiment>

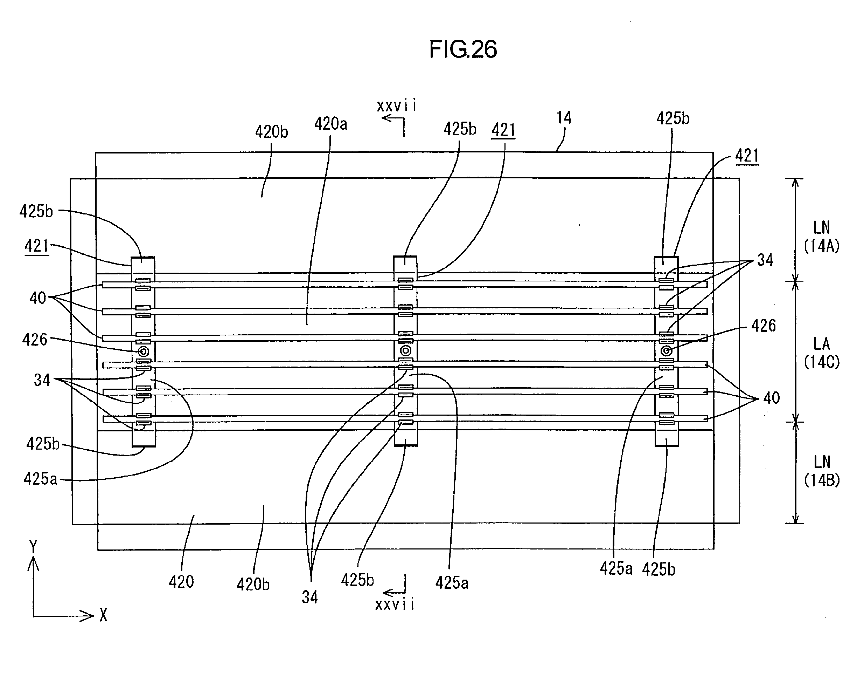

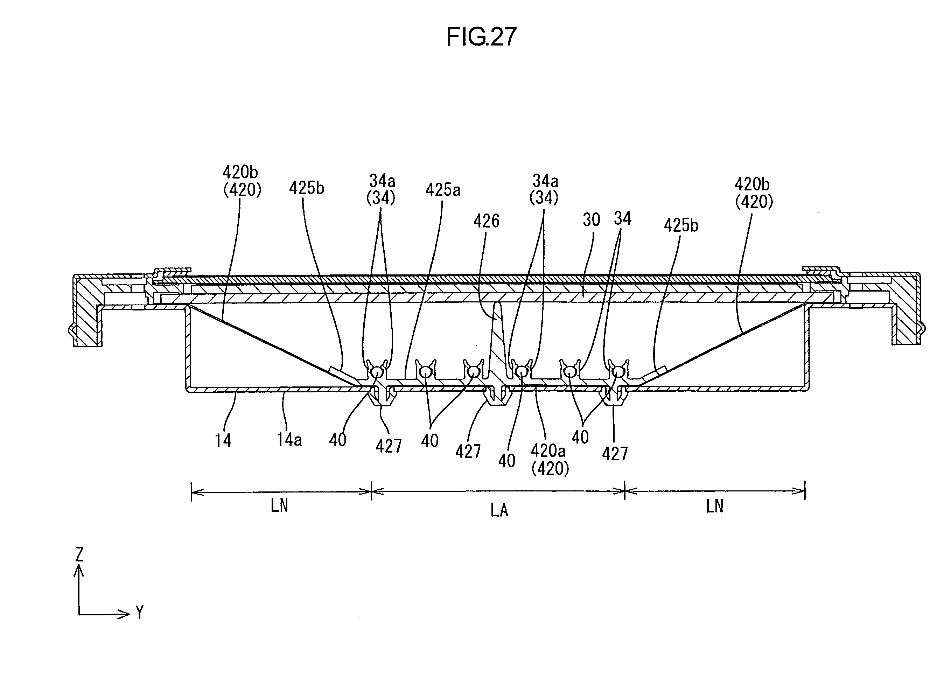

A fifth embodiment of the present invention will be described with reference to FIGS. 26 and 27. In the fifth embodiment, cold cathode tubes 40 are used as the light source and the shape of a reflection sheet 420 and pressing members 421 is modified. In accordance with the present embodiment, the pressing members 421 have a structure that is substantially the same as the structure of the pressing members according to the first embodiment. Redundant description of structures, operation, or effects similar to those of the first embodiment will be omitted.

FIG. 26 is a plan view illustrating a layout of the cold cathode tubes and the pressing members in the chassis. FIG. 27 is a cross section view taken along line xxvii-xxvii of FIG. 26.

In accordance with the present embodiment, the cold cathode tubes 40 as the light source (linear light source) have a long tubular (linear) shape, as illustrated in FIG. 26. Specifically, the cold cathode tubes 40 include a hollow and long glass tube whose end portions are sealed, and a pair of electrodes enclosed in the glass tube at the ends. The glass tubes may contain mercury and a rare gas, and their inner wall surfaces are coated with a fluorescent material. At the end portions of the cold cathode tubes 40, relay connectors (not illustrated) are disposed and connected to lead terminals protruding from the electrodes to the outside of the glass tubes. The cold cathode tubes 40 are connected via the relay connectors to an inverter board (not illustrated) mounted on the outer surface side of the bottom plate 14a of the chassis 14 for controlling the operation of the cold cathode tubes 40. The cold cathode tubes 40 may have an outer diameter smaller than the outer diameter (such as about 15.5 mm) of the hot cathode tube 17 according to the first embodiment, such as about 4 mm.

Six cold cathode tubes 40 having the above structure are arranged in parallel at predetermined intervals (arranged pitch) in an eccentrically-located manner in the chassis 14, with their length direction (axial direction) aligned with the long side direction of the chassis 14. More specifically, as illustrated in FIGS. 26 and 27, when the bottom plate 14a (facing the diffuser plate 30) of the chassis 14 is substantially equally divided into a first end portion 14A, a second end portion 14B on the end portion opposite to the first end portion 14A, and a middle portion 14C sandwiched between the first end portion 14A and the second end portion 14B in the short side direction, the cold cathode tubes 40 are disposed in the middle portion 14C of the bottom plate 14a, where a light source arrangement area LA is formed. The light source arrangement area LA according to the present embodiment is wider than the light source arrangement area LA according to the first embodiment. On the other hand, in the first end portion 14A and the second end portion 14B of the bottom plate 14a, the cold cathode tubes 40 are not disposed, where light source non-arrangement areas LN are formed. Thus, the cold cathode tubes 40 are eccentrically disposed in the middle portion of the bottom plate 14a of the chassis 14 in the short side direction, where the light source arrangement area LA is formed. The area of the light source arrangement area LA is larger than the area of each of the light source non-arrangement areas LN. Further, the ratio of the area of the light source arrangement area LA (length dimension in the Y-axis direction) to the area of the entire screen (vertical dimension (short side dimension) of the screen) is larger than the ratio according to the first embodiment and may be about 42%. The pair of the light source non-arrangement areas LN may have substantially the same area. The cold cathode tubes 40 have a length dimension substantially the same as the lateral dimension (long side dimension) of the screen.

The bottom portion 420a of the reflection sheet 420 has a short side dimension slightly larger than the light source arrangement area LA of the bottom plate 14a of the chassis 14 and overlaps with the light source arrangement area LA in plan view. Namely, the area of forming the bottom portion 420a is extended in accordance with the light source arrangement area LA and, as a result, the area of forming the rising portions 420b corresponding to the light source non-arrangement areas LN is reduced. Thus, the rising angle of the rising portions 420b from the bottom portion 420a is larger than the rising angle according to the first embodiment. The bottom-portion pressing portion 425a of the pressing member 421 has an increased long side dimension as a result of the extension of the bottom portion 420a. Therefore, the bottom-portion pressing portion 425a can press the bottom portion 420a along its entire length in the short side direction. The rising angle of the rising portion pressing portion 425b from the bottom-portion pressing portion 425a is substantially the same as the rising angle of the rising portions 420b.

The bottom-portion pressing portion 425a includes light source holding portions 34 protruding toward the front side and configured to hold the cold cathode tubes 40. Six light source holding portions 34 are arranged in parallel at predetermined intervals along the long side direction of the bottom-portion pressing portion 425a, where the arranged pitch is the same as the arranged pitch of the cold cathode tubes 40. Each of the light source holding portions 34 includes a pair of arm portions 34a rising from the bottom-portion pressing portion 425a toward the front side. Each pair of the arm portions 34a has a gap at the distal portions allowing the cold cathode tubes 40 to be attached to or detached from the arm portions 34a. The arm portions 34a are elastically deformable such that each pair of the arm portions 34a can be opened outwardly when the cold cathode tubes 40 are attached or detached, and can elastically hold the cold cathode tubes 40 therebetween. Thus, the light source holding portions 34 can hold the cold cathode tubes 40 straight in the axial direction, while a constant positional relationship is maintained between the cold cathode tubes 40 and the diffuser plate 30 in the Z-axis direction. Support portions 426 are disposed at a middle position of the bottom-portion pressing portions 425a in the long side direction. Attaching portions 427 are disposed at three locations on each of the bottom-portion pressing portions 425a at intervals in the long side direction.

Thus, in accordance with the present embodiment, the light source may be the cold cathode tubes 40. In this way, longer operating life can be obtained and lighting control can be easily obtained.

The pressing members 421 include the light source holding portions 34 configured to hold the cold cathode tubes 40. In this way, the pressing members 421 provide the function of holding the cold cathode tubes 40.

### <Sixth embodiment>

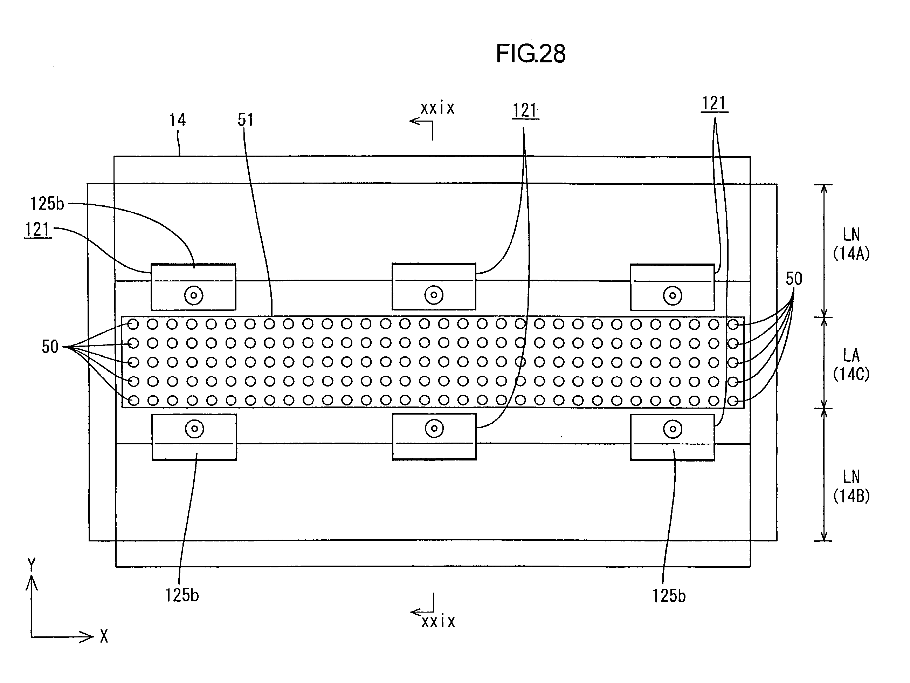

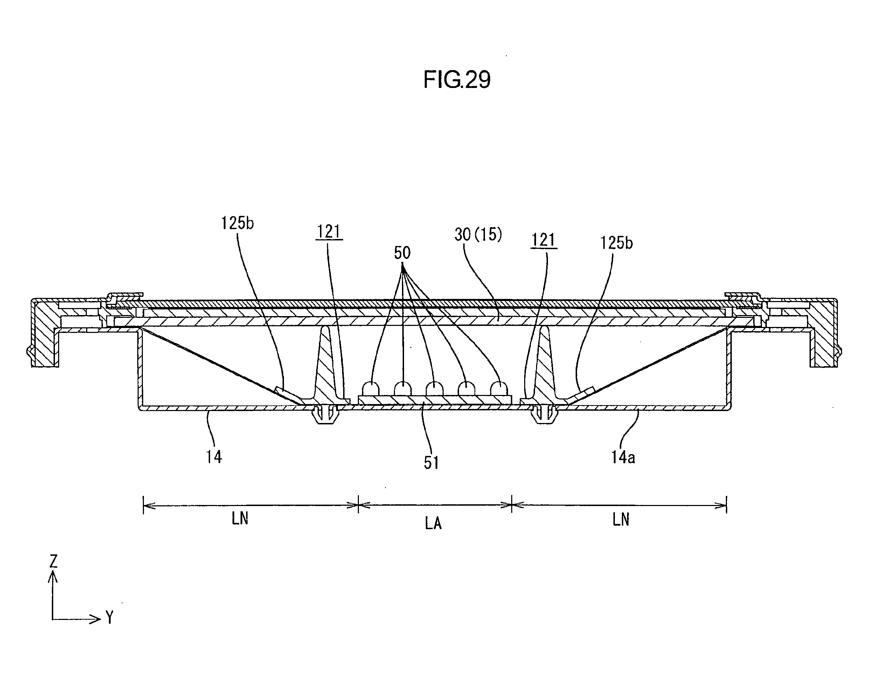

A sixth embodiment of the present invention will be described with reference to FIGS. 28 and 29. In the sixth embodiment, LEDs 50 are used as the light source. According to the present embodiment, pressing members 121 similar in structure to the pressing members according to the second embodiment are used. Redundant description of structures, operation, or effects similar to those of the first embodiment or the second embodiment will be omitted.

FIG. 28 is a plan view illustrating a layout of the LEDs and the pressing members in the chassis. FIG. 29 is a cross section view taken along line xxix-xxix of FIG. 28.

As illustrated in FIGS. 28 and 29, a number of the LEDs 50 constituting the light source according to the present embodiment are mounted on a LED board 51 housed in the chassis 14 such that the LEDs 50 as a whole constitute a linear light source extended in the X-axis direction. The LED board 51 may be made of a synthetic resin and have a white surface for high reflectivity. The LED board 51 extends along the bottom plate 14a of the chassis 14 and is fixed to the bottom plate 14a with a fixing means (not illustrated). The LED board 51 has a horizontally long rectangular shape in plan view, and is attached to the bottom plate 14a with the long side direction aligned with the long side direction of the chassis 14. The LED board 51 has a short side dimension smaller than the vertical dimension of the screen (short side dimension of the chassis 14). The LED board 51 has a long side dimension substantially the same as the lateral dimension of the screen (long side dimension of the chassis 14). On the LED board 51, a wiring pattern made of a metal film is formed, and the LEDs 50 are mounted at predetermined positions thereon. The LED board 51 is connected to an external control board (not illustrated) which supplies electric power required for lighting the LEDs 50 and by which the operation of the LEDs 50 can be controlled.

The LEDs 50 are surface-mounted on the LED board 51; i.e., the LEDs 50 are of a surface-mounted type. Specifically, a number of the LEDs 50 are arranged in parallel in a grid (or in a matrix form) along the X-axis direction and the Y-axis direction on the front side of the LED board 51. Each of the LEDs 50 includes a board portion fixedly attached to the LED board 51, and an LED chip sealed with a resin material on the board portion. The LED chip mounted on the board portion includes three different types of main emission wavelengths. Specifically, each of the LED chips emit single color of R (red), G (green), or B (blue). The LEDs 50 are of a top type where the emitting surface is on the side opposite to the mount surface with respect to the LED board 51. The LEDs 50 have an optical axis substantially aligned with the Z-axis direction (orthogonal to the plane of the liquid crystal panel 11 and the optical member 15).

When the bottom plate 14a of the chassis 14 (facing the diffuser plate 30) is divided into the first end portion 14A, the second end portion 14B on the end portion opposite to the first end portion 14A, and the middle portion 14C between the first end portion 14A and the second end portion 14B along the short side direction, the LED board 51 on which a number of the LEDs 50 are mounted is disposed in the middle portion 14C of the bottom plate 14a, where the light source arrangement area LA is formed. The LED board 51 is not disposed in the first end portion 14A and the second end portion 14B of the bottom plate 14a, where the light source non-arrangement areas LN are formed. Thus, the LEDs 50 and the LED board 51 are present eccentrically in the middle portion of bottom plate 14a of the chassis 14 in the short side direction where the light source arrangement area LA is formed. The ratio of the area of the light source arrangement area LA (length dimension in the Y-axis direction) to the area of the entire screen (vertical dimension (short side dimension) of the screen) may be set appropriately. The ratio may be the same as the ratio according to the first or the fifth embodiment, or the ratio may be a value other than those indicated in the first and the fifth embodiments.

The pressing members 121 are disposed in pairs at positions sandwiching the LED board 51 along the Y-axis direction, each of the pressing members 121 including the rising portion pressing portion 125b configured to press the rising portions 20b individually. The structure of the pressing members 121 may be similar to that of the pressing members according to the second embodiment and therefore its detailed description is omitted.

As described above, according to the present embodiment, the light source may be the LEDs 50. Thus, longer operating life can be obtained and a decrease in power consumption can be achieved.

### <Other embodiments>

The present invention is not limited to any of the foregoing embodiments described above with reference to the drawings. The technical scope of the present invention may include the following embodiments.
(1) In the foregoing embodiments, the rising angle of the rising portion pressing portions from the bottom-portion pressing portion is substantially the same as the rising angle of the rising portions from the bottom portion. Preferably, the rising angle of the rising portion pressing portions may be larger or smaller than the rising angle of the rising portions.

(2) In the foregoing embodiments, the rising portion pressing portions and the rising portions are described as having substantially the same shape by way of example. Preferably, the rising portion pressing portions and the rising portions may have different shapes. For example, the rising portions may have an inclined shape and the rising portion pressing portions may have an arc shape (curved shape), or vice versa.

(3) In the foregoing embodiments, the rising angle of the rising portion pressing portions and the rising portions is an acute angle of 45° or less by way of example. Preferably, the rising angle may be an acute angle of more than 45°.

(4) In the foregoing embodiments, the body portion of the pressing members has the same width between the bottom-portion pressing portion and the rising portion pressing portion by way of example. Preferably, the bottom-portion pressing portion and the rising portion pressing portion may have different width dimensions.

(5) In the foregoing embodiments, with respect to the direction from the bottom portion to the rising portion, the rising portion pressing portion is configured to press the rising portion partially by way of example. Preferably, with respect to the same direction, the rising portion pressing portion may be configured to press the rising portion along its entire length.

(6) In the foregoing embodiments, the bottom plate of the chassis is disposed in an area overlapping with the rising portions in plan view. Preferably, the bottom plate may be disposed in an area overlapping only with the bottom portion in plan view. In this case, portions of the chassis overlapping with the rising portions may be rising from the bottom plate to conform to the rising portions.
(7) In the foregoing embodiments, the rising portions are disposed at the end portions of the reflection sheet. Preferably, the reflection sheet may include a rising portion having an inverted V-shaped cross section at the center. In this case, the pressing member may include a pressing surface formed to straddle the rising portion and the bottom portion.

(8) In the foregoing embodiments, the bottom portion and the rising portions of the reflection sheet are continuous by way of example. Preferably, the reflection sheet may have a divided structure such that the bottom portion and the rising portions are separated from each other.

(9) In the fourth embodiment, the light source is the cold cathode tubes according to the fifth embodiment or the LEDs according to the sixth embodiment.

(10) In the fourth embodiment, the pressing members are the type according to the first embodiment or the type according to the second embodiment.

(11) In the foregoing embodiments, the pressing members include the support portions. Preferably, the support portions may be omitted.

(12) In the foregoing embodiments, the chassis is made of a synthetic resin. Preferably, the chassis may be made of a metal.

(13) In the foregoing embodiments, the attaching structure attaching the pressing members to the chassis includes the attaching portion of the insertion type. Preferably, the attaching structure may be of a slide type. The attaching structure of the slide type may include a hook-shaped attaching portion. For example, the body portion is pressed onto the bottom plate of the chassis and then slid along the bottom plate such that the hook of the attaching portion can be locked with the edge of an attaching hole.

(14) In the foregoing embodiments, the pressing members include the attaching portions as the attaching structure with respect to the chassis. Preferably, the attaching portions may be omitted from the pressing members. In this case, the pressing members may be attached to the chassis by interposing an adhesive layer between the body portion and the bottom plate of the chassis or the reflection sheet.

(15) In the foregoing embodiments, the color of the surface of the pressing members is white by way of example. Preferably, the color of the surface of the pressing members may be milky white or silver. Preferably, the color of the surface may be set by applying paint with a desired color to the surface of the pressing members.

(16) In the foregoing embodiments, the support portions are contacted with the diffuser plate disposed straight in the X-axis direction and the Y-axis direction. Preferably, the support portions may not be contacted with the diffuser plate disposed straight as described above (specifically, the protruding distal portion of the support portions may be disposed closer to the light source than the light source-side surface of the diffuser plate). In this structure, even when the diffuser plate is thermally expanded by a change in the thermal environment within the backlight unit, the diffuser plate is allowed to deform and be warped toward the light source side within the clearance maintained between the diffuser plate and the support portions. Thus, bending or formation of wrinkles in the diffuser plate is made difficult to occur, thereby making uneven brightness of the illumination light from the diffuser plate difficult to occur.

(17) In the first embodiment, the light source is a single hot cathode tube. Preferably, the number of the hot cathode tubes may be varied and may be two or more. Specifically, when two hot cathode tubes are used, for example, the ratio of the light source arrangement area to the vertical dimension of the screen may be approximately 37%. When three or more hot cathode tubes are used, the ratio of the light source arrangement area may be adjusted in accordance with the number of the hot cathode tubes.

(18) In the fifth embodiment, the light sources are six cold cathode tubes. Preferably, the number of the cold cathode tubes may be varied and may be five or less or seven or more. For example, when four cold cathode tubes are used, the ratio of the light source arrangement area to the vertical dimension of the screen may be approximately 26%. When eight cold cathode tubes are used, the ratio of the light source arrangement area to the vertical dimension of the screen may be approximately 58%. When the number of the cold cathode tubes is other than those mentioned above, the ratio of the light source arrangement area may be adjusted in proportion to the number of the cold cathode tubes.

(19) In the sixth embodiment, the size of the LED board relative to the chassis, the location and number of the LEDs on the LED board may be variously set.

(20) In the foregoing embodiments, the middle portion of the chassis corresponds to the light source arrangement area while the first end portion and the second end portion of the chassis correspond to the light source non-arrangement areas. Preferably, at least one of the first end portion and the second end portion of the chassis may correspond to the light source arrangement area while the other portions may correspond to the light source non-arrangement area. In this case, the first end portion and the middle portion may correspond to the light source arrangement area, or the second end portion and the middle portion may correspond to the light source arrangement area.

(21) In the foregoing embodiments, the light sources are eccentrically disposed in the chassis (i.e., there are the light source arrangement area and the light source non-arrangement area). Preferably, the light sources may be uniformly disposed in the entire area of the chassis.

(22) In the first to the fifth embodiments, the light source is a hot cathode tube or a cold cathode tube as a type of fluorescent tube (linear light source). Preferably, other types of fluorescent tube may be used. Preferably, the light source may be a discharge tube other than the fluorescent tube (such as mercury lamps).

(23) In the sixth embodiment, the light source is an LED, which is a type of a point light source. Preferably, the light source may be other types of point light source, or a planar light source such as an organic EL light source.

(24) In the foregoing embodiments, one type of light source is used. Preferably, a plurality of types of light source may be used in a mixed manner. Specifically, a hot cathode tube and a cold cathode tube may be mixed; a hot cathode tube and an LED may be mixed; a cold cathode tube and an LED may be mixed; or a hot cathode tube, a cold cathode tube, and an LED may be mixed.

(25) In the foregoing embodiments, dots of the dot pattern constituting the light reflecting portion of the diffuser plate is circular dots. However, the shape of the dots is not limited to circular and may be any shape, such as elliptical or polygonal shape.

(26) In the foregoing embodiments, the light reflecting portion is formed on the surface of the diffuser plate by printing. Preferably, the light reflecting portion may be formed by other methods, such as metal deposition.

(27) In the foregoing embodiments, light reflectance in the plane of the diffuser plate is adjusted by forming the light reflecting portion on the surface of the diffuser plate. Preferably, the light reflectance of the diffuser plate itself may be adjusted as follows. Generally, a diffuser plate includes a light transmissive substrate in which light scattering particles are dispersed. Thus, the light reflectance of the diffuser plate itself can be determined by the compounding ratio (wt%) of the light scattering particles to the light transmissive substrate. Namely, by relatively increasing the compounding ratio of the light scattering particles, the light reflectance can be relatively increased. Conversely, by relatively decreasing the compounding ratio of the light scattering particles, the light reflectance can be relatively decreased.

(28) In the foregoing embodiments, light reflectance of the diffuser plate is designed or controlled by varying the area of the dots constituting the light reflecting portion. Preferably, the light reflectance may be controlled by varying the intervals at which dots with the same area are disposed, or forming dots with different light reflectance. The dots with different light reflectance may be formed by using a plurality of materials having different light reflectance.

(29) In the foregoing embodiments, the light reflecting portion is formed on the diffuser plate of the optical member and the light reflectance of the light reflecting portion is appropriately controlled. Preferably, the light reflecting portion may be formed on an optical member other than the diffuser plate, and the light reflectance of the light reflecting portion may be appropriately controlled. The number or type of the diffuser plate or the optical sheet used as optical members may be appropriately changed.

(30) In other embodiments, the screen size, the aspect ratio, and the like of the liquid crystal display device may be appropriately changed.

(31) In the foregoing embodiments, the liquid crystal panel and the chassis are vertically disposed with their short side direction aligned with the vertical direction by way of example. Preferably, the liquid crystal panel and the chassis may be vertically disposed with their long side direction aligned with the vertical direction.

(32) In the foregoing embodiments, TFTs is used as the switching components of the liquid crystal display device. Preferably, switching components other than TFTs (such as thin-film diodes (TFD)) may be used in the liquid crystal display device. The liquid crystal display device may be configured for black-and-white display as well as color display.

(33) In the foregoing embodiments, the liquid crystal display device includes a liquid crystal panel as a display panel by way of example. Preferably, the present invention may be applied to display devices using other types of display panel.

(34) In the foregoing embodiments, the television receiver includes a tuner by way of example. Preferably, the present invention may be applied to display devices not including a tuner.

### EXPLANATION OF SYMBOLS

10: Liquid crystal display device (Display device)
11: Liquid crystal panel (Display panel)
12: Backlight unit (Lighting device)
14, 214: Chassis
14a, 214a: Bottom plate
14b, 214b: Side plate
14c: Receiving plate
14A: First end portion
14B: Second end portion
14C: Middle portion
15: Optical member
17: Hot cathode tube (Light source)
20, 320, 420: Reflection sheet
20a, 320a, 420a: Bottom portion
20b, 320b, 420b: Rising portion
20c: Extending portion
21, 121, 321, 421: Pressing member
26, 126, 326, 426: Support portion
27, 127, 327, 427: Attaching portion
28, 128, 328: Pressing surface
30: Diffuser plate (Optical member)
31: Optical sheet (Optical member)
32: Light reflecting portion
32a: Dot
33: Receiving portion
34: Light source holding portion
40: Cold cathode tube (Light source)
50: LED (Light source)
320bA: First rising portion
320bB: Second rising portion
328bA: First pressing surface
328bB: Second pressing surface
DA: Light source overlapping portion (Portion overlapping with light source arrangement area)
DN: Light source non-overlapping portion (Portion overlapping with light source non-arrangement area)
LA: Light source arrangement area
LN: Light source non-arrangement area
TV: Television receiver

## Claims

1. A lighting device comprising:
a light source;
a chassis including a bottom plate disposed on a side opposite to a light output side with respect to the light source and housing the light source;
a reflection sheet including a bottom portion disposed along the bottom plate and a rising portion rising from the bottom portion toward the light output side, the reflection sheet configured to reflect light; and
a pressing member extending over the bottom portion and the rising portion and including a pressing surface pressing the bottom portion and the rising portion from the light output side.

2. The lighting device according to claim 1, wherein the bottom plate of the chassis is disposed in an area overlapping with the rising portion in plan view.

3. The lighting device according to claim 2, wherein:
the chassis includes a side plate and an outwardly extending receiving plate, the side plate being disposed at an end portion of the bottom plate and rising toward the light output side, and the outwardly extending receiving plate being disposed at a rising end portion of the side plate; and
the reflecting plate includes an extending portion disposed at a rising end portion of the rising portion and extending along the receiving plate.

4. The lighting device according to one of claims 2 and 3, wherein:
the chassis includes a receiving portion disposed between the bottom plate and the rising portion; and
the receiving portion receives the rising portion from the side opposite to the light output side.

5. The lighting device according to any one of claims 1 to 4, wherein the rising portion is rising from the bottom portion at an acute rising angle.

6. The lighting device according to any one of claims 1 to 5, wherein:
the pressing surface of the pressing member has a bent shape substantially conforming to an outer shape of the bottom portion and the rising portion; and
the bent shape having a bent angle substantially the same as a rising angle of the rising portion formed with respect to the bottom portion.

7. The lighting device according to any one of claims 1 to 6, wherein the pressing surface of the pressing member presses the rising portion partially in a direction from the bottom portion to the rising portion.

8. The lighting device according to any one of claims 1 to 7, wherein the rising portion is inclined with respect to the bottom portion.

9. The lighting device according to any one of claims 1 to 8, wherein the chassis includes a light source arrangement area in which the light source is arranged and a light source non-arrangement area in which no light source is arranged.

10. The lighting device according to claim 9, wherein:
the chassis includes at least a first end portion, a second end portion disposed on an end portion opposite to the first end portion, and a middle portion between the first end portion and the second end portion; and
the middle portion corresponds to the light source arrangement area, and each of the first end portion and the second end portion corresponds to the light source non-arrangement area.

11. The lighting device according to one of claims 9 and 10, wherein:
at least a part of the bottom portion is disposed in the light source arrangement area; and
at least a part of the rising portion is disposed in the light source non-arrangement area.

12. The lighting device according to any one of claims 9 to 11, further comprising an optical member disposed on the light output side with respect to the light source, wherein:
the optical member has a surface facing the light source; and
at least the surface has light reflectance higher in a portion overlapping with the light source non-arrangement area than in a portion overlapping with the light source arrangement area.

13. The lighting device according to claim 12, wherein the light reflectance of at least the surface of the optical member facing the light source decreases as is as far away from the light source.

14. The lighting device according to any one of claims 1 to 13, further comprising an optical member disposed on the light output side with respect to the light source,
wherein the pressing member includes a support portion protruding toward the light output side and supporting the optical member.

15. The lighting device according to claim 14, wherein:
the pressing member includes an attaching portion protruding toward the side opposite to the light output side and attached to the bottom plate; and
the support portion and the attaching portion are disposed at positions overlapping with each other in plan view.

16. The lighting device according to any one of claims 1 to 15, wherein:
the pressing member includes attaching portions each of which protrudes toward the side opposite to the light output side and attached to the bottom plate, the pressing member having an elongated shape as a whole; and
the attaching portions are disposed along a long side direction of the pressing member.

17. The lighting device according to any one of claims 1 to 16, wherein the pressing surface of the pressing member is disposed along an entire length of the bottom portion in one direction.

18. The lighting device according to claim 17, wherein:
the rising portion includes at least a pair of rising portions, and the rising portions are provided so as to sandwich the bottom portion therebetween; and
the pressing surface of the pressing member extends over the bottom portion and at least the pair of the rising portions.

19. The lighting device according to claim 18, wherein the pressing member has a symmetrical shape with respect to a middle position between the pair of the rising portions.

20. The lighting device according to any one of claims 1 to 16, wherein the pressing surface of the pressing member is disposed on a part of the bottom portion.

21. The lighting device according to claim 20, wherein:
the rising portion includes at least a pair of rising portions that is disposed so as to sandwich the bottom portion therebetween; and
the pressing member includes at least a pair of pressing members that is provided to correspond to the pair of the rising portions respectively.

22. The lighting device according to any one of claims 1 to 21, wherein:
the bottom portion is disposed in a middle portion of the reflection sheet;
the rising portion includes a pair of first rising portions and a pair of second rising portions, and the first rising portions are disposed so as to sandwich the bottom portion therebetween and the second rising portions are disposed so as to sandwich the bottom portion therebetween and disposed in adjacent to the first rising portions;
the pressing member is disposed at a corner of the bottom portion;
the pressing surface includes a first pressing surface pressing the first rising portion and a second pressing surface pressing the second rising portion; and
the first pressing surface and the second pressing surface are continuous with each other.

23. The lighting device according to any one of claims 1 to 22, wherein the pressing member includes a white surface.

24. The lighting device according to any one of claims 1 to 23, wherein the light source is a hot cathode tube.

25. The lighting device according to any one of claims 1 to 23, wherein the light source is a cold cathode tube.

26. The lighting device according to one of claims 24 and 25, wherein the pressing member includes a light source holding portion configured to hold the light source.

27. The lighting device according to any one of claims 1 to 23, wherein the light source is an LED.

28. A display device comprising:
the lighting device according to any one of claims 1 to 27; and
a display panel configured to provide a display by using light from the lighting device.

29. The display device according to claim 28, wherein the display panel includes a liquid crystal panel having a liquid crystal contained between a pair of substrates.

30. A television receiver comprising the display device according to one of claims 28 and 29.
